(19)

Europäisches
Patentamt
European
Patent Office
Office européen
des brevets

(11) **EP 4 369 439 A1**

(12) **EUROPEAN PATENT APPLICATION**
published in accordance with Art. 153(4) EPC

(43) Date of publication:
**15.05.2024 Bulletin 2024/20**

(21) Application number: **22942940.2**

(22) Date of filing: **19.09.2022**

(51) International Patent Classification (IPC):
**H01M 4/36** (2006.01)    **H01M 4/525** (2010.01)

(86) International application number:
**PCT/CN2022/119710**

(87) International publication number:
**WO 2024/059980 (28.03.2024 Gazette 2024/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde City, Fujian 352100 (CN)**

(72) Inventors:
• **FAN, Jingpeng
Ningde City, Fujian 352100 (CN)**

• WU, Qi
Ningde City, Fujian 352100 (CN)
• ZHANG, Zhenguo
Ningde City, Fujian 352100 (CN)
• CHEN, Qiang
Ningde City, Fujian 352100 (CN)
• ZHAO, Dong
Ningde City, Fujian 352100 (CN)
• LIU, Na
Ningde City, Fujian 352100 (CN)
• WANG, Jing
Ningde City, Fujian 352100 (CN)

(74) Representative: **Kraus & Lederer PartGmbB et al
Thomas-Wimmer-Ring 15
80539 München (DE)**

(54) **LITHIUM-CONTAINING NICKEL-MANGANESE COMPOSITE OXIDE, PREPARATION METHOD THEREFOR, POSITIVE ELECTRODE SHEET CONTAINING SAME, SECONDARY BATTERY, AND ELECTRICAL APPARATUS**

(57)    This application provides a lithium-nickel-manganese-containing composite oxide, a preparation method thereof, and a positive electrode plate, secondary battery, and electric apparatus containing the same. The lithium-nickel-manganese-containing composite oxide has a core-shell structure and includes a core and a shell enveloping surface of the core, where the core includes $Li_x(Ni_yMn_{2-y})_{1-m}M_mO_4$. M includes one or more selected from Mg, elements from group IVB to group VIB, elements from group IIIA to group VA, and lanthanide elements, where $0.95 \le x \le 1.10$, $0.40 \le y \le 0.60$, and $0.001 \le m \le 0.015$. The shell includes lithium aluminum phosphate and optionally includes lithium aluminum phosphate and aluminum phosphate. The lithium-nickel-manganese-containing composite oxide provided in this application allows the secondary battery to have a combination of high energy density, good cycling performance and storage performance, and low gas production.

**10**

FIG. 1

EP 4 369 439 A1

**Description**

**TECHNICAL FIELD**

This application pertains to the field of battery technologies, and specifically, relates to a lithium-nickel-manganese-containing composite oxide, a preparation method thereof, and a positive electrode plate, secondary battery, and electric apparatus containing the same.

**BACKGROUND**

In recent years, secondary batteries have been widely used in energy storage power supply systems such as hydroelectric, thermal, wind, and solar power plants, and many other fields including electric tools, electric bicycles, electric motorcycles, electric vehicles, military equipment, and aerospace. With the application and popularization of secondary batteries, people have an increasing demand for secondary batteries with high energy density, safety, reliability, and low costs. Due to advantages such as high energy density, good thermal stability, and low costs, cobalt-free spinel-type lithium nickel manganate has become one of the most popular positive electrode active materials. However, its high operating voltage hinders its compatibility with conventional electrolytes, and leads to severe side reactions and deterioration of the interface between positive electrode and electrolyte, thereby hindering its practical application.

**SUMMARY**

This application is intended to provide a lithium-nickel-manganese-containing composite oxide, a preparation method thereof, and a positive electrode plate, secondary battery, and electric apparatus containing the same. The lithium-nickel-manganese-containing composite oxide can allow the secondary battery to have a combination of high energy density, good cycling performance and storage performance, and low gas production.

A first aspect of this application provides a lithium-nickel-manganese-containing composite oxide, having a core-shell structure and including a core and a shell enveloping surface of the core, where the core includes $Li_x(Ni_yMn_{2-y})_{1-m}M_mO_4$, where M includes one or more selected from Mg, elements from group IVB to group VIB, elements from group IIIA to group VA, and lanthanide elements, and optionally includes one or more elements selected from Zr, W, Sb, P, Ti, B, Ta, Nb, Ce, Al, Mo, and Mg, where $0.95 \leq x \leq 1.10$, $0.40 \leq y \leq 0.60$, and $0.001 \leq m \leq 0.015$; and the shell includes lithium aluminum phosphate, and optionally includes lithium aluminum phosphate and aluminum phosphate.

The lithium-nickel-manganese-containing composite oxide provided in this application has a core-shell structure. The core has low oxygen defect content, high crystal structure stability, and low rock-salt phase content. The shell enveloping the surface of the core can effectively reduce side reactions at the interface between positive electrode and electrolyte and reduce dissolution of manganese ions. The shell includes lithium aluminum phosphate, and the lithium aluminum phosphate can construct lithium ion conduction channels, avoiding capacity reduction caused by the shell enveloping the surface of the core. Therefore, a secondary battery using the lithium-nickel-manganese-containing composite oxide provided in this application can have a combination of high energy density, good cycling performance and storage performance, and low gas production.

In any embodiment of this application, M includes one or more elements selected from W, P, B, Ta, Nb, and Mo, and optionally includes more than two elements selected from W, P, B, Ta, Nb, and Mo. This can further improve the cycling performance and storage performance of the secondary battery.

In any embodiment of this application, $0.003 \leq m \leq 0.007$. This can improve the crystal structure stability, reduce dissolution of manganese ions, reduce the oxygen defect and rock-salt phase contents, and improve the lithium ion diffusion coefficient.

In any embodiment of this application, $0.45 \leq y \leq 0.55$, and optionally y is 0.50.

In any embodiment of this application, the core satisfies $0 < (A_1/A_2)^{1/2} \leq 0.2$, and optionally $0 < (A_1/A_2)^{1/2} \leq 0.1$, where $A_1$ represents peak area of a diffraction peak of the core at 2θ of $43.7 \pm 0.2°$ in an X-ray diffraction pattern determined by using a powder X-ray diffractometer with Cu Kα1 ray, and $A_2$ represents peak area of a diffraction peak of the core at 2θ of $18.8 \pm 0.1°$ in the X-ray diffraction pattern determined by using the powder X-ray diffractometer with Cu Kα1 ray. The core of the lithium-nickel-manganese-containing composite oxide provided in this application has low oxygen defects.

In any embodiment of this application, the shell has a uniform and continuous thickness. This can better stabilize the interface between positive electrode and electrolyte, reduce dissolution of manganese ions, and allow the shell to have uniform lithium ion conduction channels, improving the charge and discharge efficiency.

In any embodiment of this application, the lithium aluminum phosphate is embedded in the shell and discretely distributed. This helps to better construct lithium ion conduction channels, avoiding capacity reduction caused by the shell enveloping the surface of the core.

In any embodiment of this application, based on a total weight of element P in the shell, a percentage of element P in the lithium aluminum phosphate in the shell is greater than 0 and less than or equal to 50wt%, and optionally 10wt%-25wt%. This can give full play to the facilitating effect of the lithium aluminum phosphate on conduction of lithium ions as well as the stabilizing effect of the aluminum phosphate on the positive electrode interface, and thus the shell has high structural stability, which can not only isolate the electrolyte and reduce the side reactions at the interface between positive electrode and electrolyte, but also conduct lithium ions.

In any embodiment of this application, thickness of the shell is below 30 nm, optionally 5 nm-30 nm, and more optionally 5 nm-20 nm. The thickness of the shell being within a suitable range can reduce the side reactions at the interface between positive electrode and electrolyte without affecting the extractable capacity, and even construct good lithium ion conduction channels, improving the charge and discharge efficiency of the material.

In any embodiment of this application, a particle size by volume $D_v50$ of the lithium-nickel-manganese-containing composite oxide is 5 $\mu$m-15 $\mu$m, and optionally 5 $\mu$m-10 $\mu$m. This can effectively reduce the side reactions at the interface between positive electrode and electrolyte, and helps to improve the cycling performance and storage performance of the secondary battery.

In any embodiment of this application, a span $(D_v90 - D_v10)/D_v50$ of the lithium-nickel-manganese-containing composite oxide is $\leq$ 1.0, and optionally $(D_v90 - D_v10)/D_v50$ is $\leq$ 0.8. This can effectively reduce the side reactions at the interface between positive electrode and electrolyte, and helps to improve the cycling performance and storage performance of the secondary battery.

In any embodiment of this application, a BET specific surface area of the lithium-nickel-manganese-containing composite oxide is 0.3 $m^2$/g-1.0 $m^2$/g, and optionally 0.3 $m^2$/g-0.7 $m^2$/g. This can effectively reduce the side reactions at the interface between positive electrode and electrolyte, and helps to improve the cycling performance and storage performance of the secondary battery.

In any embodiment of this application, particle morphology of the lithium-nickel-manganese-containing composite oxide is single crystal or quasi-single crystal, and optionally single crystal. This can effectively reduce cracking of the particles during cold pressing and use, thereby improving overall performance of the secondary battery.

In any embodiment of this application, grain shape of the lithium-nickel-manganese-containing composite oxide is an octahedron with blunted edges. This can reduce stress corrosion, reduce surface activity of the material, and decrease contact area with the electrolyte, thereby further reducing the side reactions at the interface between positive electrode and electrolyte, reducing dissolution of manganese ions, and reducing the oxygen defect and rock-salt phase contents.

A second aspect of this application provides a method for preparing lithium-nickel-manganese-containing composite oxide, including the following steps: S1. mixing a source of element Ni, a source of element Mn, a source of element M, and a source of element Li at a predetermined ratio to obtain a mixture; S2. heating the mixture obtained in S1 to a first temperature $T_1$ in an oxygen-containing atmosphere at a first pressure $P_1$ and maintaining the temperature for a first time $t_1$, to obtain a core after completion; S3, adding the core obtained in S2 to a solution containing aluminum salt and phosphate, and adjusting pH to make the aluminum salt react with the phosphate, to obtain a mixed solution after completion; S4. performing solid-liquid separation on the mixed solution obtained in S3, followed by drying and sieving, to obtain an intermediate product; and S5. mixing the intermediate product obtained in S4 and the source of element Li at a predetermined ratio, heating the mixture to a second temperature $T_2$ in the oxygen-containing atmosphere at a second pressure $P_2$, and maintaining the temperature for a second time $t_2$, to obtain a lithium-nickel-manganese-containing composite oxide after completion, where the lithium-nickel-manganese-containing composite oxide has a core-shell structure and includes a core and a shell enveloping surface of the core, where the core includes $Li_x(Ni_yMn_{2-y})_{1-m}M_mO_4$, where M includes one or more selected from Mg, elements from group IVB to group VIB, elements from group IIIA to group VA, and lanthanide elements, and optionally includes one or more elements selected from Zr, W, Sb, P, Ti, B, Ta, Nb, Ce, Al, Mo, and Mg, where $0.95 \leq x \leq 1.10$, $0.40 \leq y \leq 0.60$, and $0.001 \leq m \leq 0.015$; and the shell includes lithium aluminum phosphate, and optionally includes lithium aluminum phosphate and aluminum phosphate.

The preparation method provided in this application can achieve preparation of a lithium-nickel-manganese-containing composite oxide at low sintering temperature. In addition, it can effectively control morphology of the product, reduce oxygen defect and rock-salt phase contents, improve crystal structure stability, reduce side reactions at the interface between positive electrode and electrolyte, and reduce dissolution of manganese ions.

In any embodiment of this application, in S1, the source of element Ni and the source of element Mn are nickel manganese hydroxides.

In any embodiment of this application, in S1, the source of element M includes one or more selected from nitrate, hydrochloride, sulfate, carbonate, and acetate of element M.

In any embodiment of this application, in S1, the source of element Li includes one or more selected from lithium hydroxide, lithium carbonate, and lithium oxide.

In any embodiment of this application, in S1, a ratio of a substance amount of element Li to a total substance amount of elements Ni and Mn in the mixture is (0.45-0.55):1.

In any embodiment of this application, in S1, a ratio of a substance amount of element Li to a substance amount of element M in the mixture is 1:(0.001-0.015), and optionally 1:(0.003-0.007). This can improve the crystal structure stability, reduce dissolution of manganese ions, reduce the oxygen defect and rock-salt phase contents, and improve the lithium ion diffusion coefficient.

In any embodiment of this application, in S2, a temperature rise velocity is $\leq 5°C/min$, and optionally $\leq 3°C/min$. This helps to make the obtained lithium-nickel-manganese-containing composite oxide have more uniform primary particles with narrower particle size distribution.

In any embodiment of this application, in S2, an oxygen concentration of the oxygen-containing atmosphere is > 60vol%, and optionally 80vol%-100vol%.

In any embodiment of this application, in S2, the first pressure $P_1$ is 0.02 MPa-0.08 MPa relative to atmospheric pressure, and optionally 0.02 MPa-0.04 MPa.

The oxygen concentration of the oxygen-containing atmosphere and/or the first pressure being within a suitable range can reduce a proportion of small particles in the product, and help to reduce the oxygen defect content in the obtained lithium-nickel-manganese-containing composite oxide.

In any embodiment of this application, in S2, the first temperature $T_1$ is 500°C-1200°C, and optionally 700°C-1200°C.

In any embodiment of this application, in S2, the first time $t_1$ is 5 h-40 h, and optionally 5 h-30 h.

The first temperature and/or the first time being within a suitable range helps to adjust the particle morphology, size, and span of the obtained lithium-nickel-manganese-containing composite oxide.

In any embodiment of this application, in S3, the core obtained in S2 is added to the aluminum salt solution, then the phosphate solution is added, and the pH is adjusted to make the aluminum salt react with the phosphate, to obtain the mixed solution after completion. This can generate a coating layer in-situ on the surface of the core, and the coating layer is more compact with a more uniform thickness.

In any embodiment of this application, in S3, the aluminum salt includes one or more selected from aluminum nitrate, aluminum chloride, aluminum sulfate, and aluminum carbonate.

In any embodiment of this application, in S3, the phosphate includes one or more selected from ammonium hydrogen phosphate, ammonium dihydrogen phosphate, and ammonium phosphate.

In any embodiment of this application, in S3, the pH for reaction between the aluminum salt and the phosphate is controlled to be 5-9, and optionally 6-8. This can obtain an aluminum phosphate coating layer that is compact with a uniform thickness.

In any embodiment of this application, in S3, a ratio of a substance amount of element Al in the aluminum salt to a substance amount of element P in the phosphate is 1:1.

In any embodiment of this application, in S3, based on a mass of the core, the phosphate is added in an amount such that a mass of element P is 0.05wt%-1wt%, and optionally 0.1wt%-0.5wt%.

In any embodiment of this application, in S5, a temperature rise velocity is $\leq 5°C/min$, and optionally $\leq 3°C/min$. This helps to make the obtained lithium-nickel-manganese-containing composite oxide have more uniform primary particles with narrower particle size distribution, and can compensate for oxygen defects in the core.

In any embodiment of this application, in S5, an oxygen concentration of the oxygen-containing atmosphere is > 60vol%, and optionally 80vol%-100vol%.

In any embodiment of this application, in S5, the second pressure $P_2$ is 0.02 MPa-0.08 MPa relative to atmospheric pressure, and optionally 0.02 MPa-0.04 MPa.

The oxygen concentration of the oxygen-containing atmosphere and/or the second pressure being within a suitable range can reduce a proportion of small particles in the product, and compensate for the oxygen defects in the core, thereby further reducing the oxygen defects in the obtained lithium-nickel-manganese-containing composite oxide, effectively reducing the $Mn^{3+}$ content, reducing dissolution of manganese ions, and reducing the rock-salt phase content. In addition, this helps the aluminum phosphate to react with the source of element Li to form a coating layer that is compact with a uniform thickness.

In any embodiment of this application, in S5, the second temperature $T_2$ is 400°C-700°C, and optionally 500°C-700°C.

In any embodiment of this application, in S5, the second time $t_2$ is 5 h-40 h, and optionally 5 h-30 h.

The second temperature and/or the second time being within a suitable range helps to compensate for the oxygen defects in the core, improves the coating effect of the shell layer, and can obtain a coating layer that is compact with a uniform thickness. In addition, this helps to form lithium aluminum phosphate and aluminum phosphate with higher crystalline content, and thus can further improve the structural stability of the shell, thereby better isolating the electrolyte, reducing the side reactions at the interface between positive electrode and electrolyte, and helping to better conduct lithium ions.

In any embodiment of this application, a ratio of a substance amount of element Li in the source of element Li in S5 to a substance amount of element P in the phosphate in S3 is $\leq 0.75$, and optionally $\leq 0.375$. This allows the generated lithium aluminum phosphate to be embedded in the aluminum phosphate coating layer and discretely distributed, which in turn helps the lithium aluminum phosphate to construct lithium ion conduction channels, avoiding capacity reduction caused by the shell enveloping the surface of the core.

In any embodiment of this application, the source of element Li in S5 includes one or more selected from lithium hydroxide, lithium carbonate, and lithium oxide.

A third aspect of this application provides a positive electrode plate including a positive electrode current collector and a positive electrode film layer disposed on at least one surface of the positive electrode current collector, where the positive electrode film layer includes the lithium-nickel-manganese-containing composite oxide according to the first aspect of this application or a lithium-nickel-manganese-containing composite oxide prepared by using the method according to the second aspect of this application. Based on a total weight of the positive electrode film layer, a percentage of the lithium-nickel-manganese-containing composite oxide in the positive electrode film layer is 1wt%-99wt%, and optionally 85wt%-99wt%.

A fourth aspect of this application provides a secondary battery including the positive electrode plate according to the third aspect of this application.

A fifth aspect of this application provides an electric apparatus including the secondary battery according to the fourth aspect of this application.

The lithium-nickel-manganese-containing composite oxide provided in this application has a core-shell structure. The core has low oxygen defect content, high crystal structure stability, and low rock-salt phase content. The shell enveloping the surface of the core can effectively reduce side reactions at the interface between positive electrode and electrolyte and reduce dissolution of manganese ions. The shell includes lithium aluminum phosphate, and the lithium aluminum phosphate can construct lithium ion conduction channels, avoiding capacity reduction caused by the shell enveloping the surface of the core. Therefore, a secondary battery using the lithium-nickel-manganese-containing composite oxide provided in this application can have a combination of high energy density, good cycling performance and storage performance, and low gas production. The electric apparatus of this application includes the secondary battery provided in this application, and therefore has at least the same advantages as the secondary battery.

## BRIEF DESCRIPTION OF DRAWINGS

To describe the technical solutions of the embodiments of this application more clearly, the following briefly describes the accompanying drawings for describing the embodiments of this application. Apparently, the accompanying drawings in the following descriptions show merely some embodiments of this application, and persons of ordinary skill in the art may derive other drawings from these accompanying drawings without creative efforts.

FIG. 1 is a schematic diagram of a lithium-nickel-manganese-containing composite oxide of this application.
FIG. 2 is a schematic diagram of a secondary battery according to an embodiment of this application.
FIG. 3 is a schematic exploded view of the secondary battery according to the embodiment in FIG. 2.
FIG. 4 is a schematic diagram of a battery module according to an embodiment of this application.
FIG. 5 is a schematic diagram of a battery pack according to an embodiment of this application.
FIG. 6 is a schematic exploded view of the battery pack according to the embodiment shown in FIG. 5.
FIG. 7 is a schematic diagram of an electric apparatus using a secondary battery of this application as a power source according to an embodiment.
FIG. 8 is an X-ray diffraction pattern of a lithium-nickel-manganese-containing composite oxide prepared in Example 1 that is determined by using a powder X-ray diffractometer with Cu K$\alpha$1 ray.
FIG. 9 is a scanning electron microscope image of the lithium-nickel-manganese-containing composite oxide prepared in Example 1.
FIG. 10 is an X-ray diffraction pattern of a lithium-nickel-manganese-containing composite oxide prepared in Comparative Example 1 that is determined by using a powder X-ray diffractometer with Cu K$\alpha$1 ray.
FIG. 11 is a scanning electron microscope image of the lithium-nickel-manganese-containing composite oxide prepared in Comparative Example 1.
FIG. 12 is an X-ray diffraction pattern of a lithium-nickel-manganese-containing composite oxide prepared in Comparative Example 5 that is determined by using a powder X-ray diffractometer with Cu K$\alpha$1 ray.
FIG. 13 is a scanning electron microscope image of the lithium-nickel-manganese-containing composite oxide prepared in Comparative Example 5.

In the accompanying drawings, the figures are not necessarily drawn to scale. Reference signs are as follows: 1. battery pack, 2. upper box body, 3. lower box body, 4. battery module, 5. secondary battery, 51. housing, 52. electrode assembly, 53. cover plate, 10. lithium-nickel-manganese-containing composite oxide, 101. core, 102. shell, 102a. aluminum phosphate, and 102b. lithium aluminum phosphate.

**DESCRIPTION OF EMBODIMENTS**

The following specifically discloses in detail embodiments of the lithium-nickel-manganese-containing composite oxide, preparation method thereof, and positive electrode plate, secondary battery, and electric apparatus containing the same of this application with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions, and such technical solutions should be considered to be included in the disclosure of this application.

Unless otherwise specified, all the technical features and optional technical features of this application can be combined with each other to form new technical solutions, and such technical solutions should be considered to be included in the disclosure of this application.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In this application, the term "a plurality of" means two or more than two and the term "a plurality of types" means two or more than two types.

In this application, being "about" a value indicates a range of $\pm$ 10% of that value.

Unless otherwise specified, the terms used in this application have well-known meanings as commonly understood by persons skilled in the art.

Unless otherwise specified, numerical values of parameters mentioned in this application may be measured by using various measurement methods commonly used in the art, for example, they may be measured by using the measurement methods provided in this application.

Due to a discharge voltage plateau of up to 4.7 V and a theoretical discharge specific capacity of up to 147 mAh/g, spinel-type lithium nickel manganate $LiNi_{0.5}Mn_{1.5}O_4$ has the advantage of high specific energy density. Li and Ni contents in the spinel-type lithium nickel manganate are significantly less than those in a ternary positive electrode active material, and preparation processes are simple, so the spinel-type lithium nickel manganate has the advantage of low preparation costs. With high thermal stability and a wide allowable range of overcharging and overdischarging, the spinel-type lithium nickel manganate also has the advantage of good safety performance.

Therefore, the spinel-type lithium nickel manganate is a highly promising positive electrode active material with low costs and high energy density. However, the current spinel-type lithium nickel manganate is typically synthesized at high temperature, and is prone to oxygen deficiency, and thus a large quantity of oxygen defects and rock-salt phase structures are easily formed, which leads to reduced structural stability and poorer cycling performance. In addition, under high-temperature and high-voltage operating conditions, $Mn^{3+}$ in a bulk phase of the spinel-type lithium nickel manganate is prone to disproportionation reactions to form $Mn^{4+}$ and $Mn^{2+}$, and the formed $Mn^{2+}$ is dissolved in an electrolyte, which leads to fragmentation of the spinel structure. Moreover, $Mn^{2+}$ further undergoes reduction reactions and deposits on a surface of a negative electrode. Under the high-temperature and high-voltage operating conditions, the spinel-type lithium nickel manganate is also prone to oxidizing and decomposing organic solvents in the electrolyte, which thickens an interface between positive electrode and electrolyte and increases interface impedance, thereby seriously affecting electrochemical performance of a secondary battery.

In view of the foregoing problems, through extensive research, the inventors of this application have provided a lithium-nickel-manganese-containing composite oxide with low oxygen defects.

**Lithium-nickel-manganese-containing composite oxide**

A first aspect of the embodiments of this application provides a lithium-nickel-manganese-containing composite oxide, having a core-shell structure and including a core and a shell enveloping surface of the core. The core includes $Li_x(Ni_yMn_{2-y})_{1-m}M_mO_4$, where M includes one or more selected from Mg, elements from group IVB to group VIB, elements from group IIIA to group VA, and lanthanide elements, where $0.95 \leq x \leq 1.10$, $0.40 \leq y \leq 0.60$, and $0.001 \leq m \leq 0.015$; and the shell includes lithium aluminum phosphate ($Li_3Al(PO_4)_2$).

The lithium-nickel-manganese-containing composite oxide provided in this application has a core-shell structure. The core has low oxygen defect content, high crystal structure stability, and low rock-salt phase content. The shell enveloping the surface of the core can effectively reduce side reactions at the interface between positive electrode and electrolyte and reduce dissolution of manganese ions. The shell includes lithium aluminum phosphate, and the lithium aluminum phosphate can construct lithium ion conduction channels, avoiding capacity reduction caused by the shell enveloping the surface of the core. Therefore, a secondary battery using the lithium-nickel-manganese-containing composite oxide provided in this application can have a combination of high energy density, good cycling performance and storage performance, and low gas production.

In the core, M includes one or more selected from Mg, elements from group IVB to group VIB, elements from group IIIA to group VA, and lanthanide elements. In some embodiments, optionally, M includes one or more elements selected from Zr, W, Sb, P, Ti, B, Ta, Nb, Ce, Al, Mo, and Mg. The foregoing doping element M can enter lattices of grains and occupy transition metal sites and vacancies, and M-O bonds formed have higher bond energy than Mn-O bonds, thereby weakening bond energy of Li-O bonds while stabilizing the spinel structure. This can improve the crystal structure stability, reduce dissolution of manganese ions, reduce the oxygen defect and rock-salt phase contents, and improve the lithium ion diffusion coefficient. The foregoing doping element M can also blunt edges and improve morphology, thereby reducing a specific surface area of the material and reducing the side reactions at the interface between positive electrode and electrolyte. The foregoing doping element M can also accelerate growth of primary particles during material preparation, so that the material can be sintered at low temperature and achieve a target size, thereby effectively reducing the oxygen defects.

In some embodiments, optionally, M includes one or more elements selected from W, P, B, Ta, Nb, and Mo, and more optionally includes more than two elements selected from W, P, B, Ta, Nb, and Mo, for example, may include a combination of W and Nb, a combination of Ta and Mo, and a combination of P and W. This can further improve the cycling performance and storage performance of the secondary battery.

In the core, a percentage of the doping element M satisfies $0.001 \leq m \leq 0.015$. For example, m may be 0.001, 0.002, 0.003, 0.004, 0.005, 0.006, 0.007, 0.008, 0.009, 0.010, 0.011, 0.012, 0.013, 0.014, 0.015, or within any range defined by any of these values. Optionally, $0.001 \leq m \leq 0.012$, $0.001 \leq m \leq 0.010$, or $0.003 \leq m \leq 0.007$. This can improve the crystal structure stability, reduce dissolution of manganese ions, reduce the oxygen defect and rock-salt phase contents, and improve the lithium ion diffusion coefficient. When the percentage of the doping element M is excessively high, extractable capacity of the material is significantly reduced, which is unfavorable to the energy density of the secondary battery.

In the core, $0.40 \leq y \leq 0.60$. For example, y may be 0.40, 0.42, 0.44, 0.46, 0.48, 0.50, 0.52, 0.54, 0.56, 0.58, 0.60, or within any range defined by any of these values. Optionally, $0.45 \leq y \leq 0.55$. More optionally, y is 0.50.

The core of the lithium-nickel-manganese-containing composite oxide provided in this application has low oxygen defects. In some embodiments, the core satisfies $0 < (A_1/A_2)^{1/2} \leq 0.2$, and optionally $0 < (A_1/A_2)^{1/2} \leq 0.18$, $0 < (A_1/A_2)^{1/2} \leq 0.16$, $0 < (A_1/A_2)^{1/2} \leq 0.14$, $0 < (A_1/A_2)^{1/2} \leq 0.12$, $0 < (A_1/A_2)^{1/2} \leq 0.1$, or $0 < (A_1/A_2)^{1/2} \leq 0.08$. $A_1$ represents peak area of a diffraction peak of the core at $2\theta$ of $43.7 \pm 0.2°$ in an X-ray diffraction pattern determined by using a powder X-ray diffractometer with Cu $K\alpha1$ ray, and $A_2$ represents peak area of a diffraction peak of the core at $2\theta$ of $18.8 \pm 0.1°$ in the X-ray diffraction pattern determined by using the powder X-ray diffractometer with Cu $K\alpha1$ ray.

In some embodiments, grain shape of the lithium-nickel-manganese-containing composite oxide is an octahedron with blunted edges. Grain shape of the currently prepared spinel-type lithium nickel manganate is mostly an octahedron or a truncated octahedron. Due to sharp edges and corners on its surface, these edges and corners are prone to stress corrosion, thereby deteriorating performance of the secondary battery. The foregoing doping element M provided in this application also helps to blunt edges and corners of the octahedron, reduce stress corrosion, reduce surface activity of the material, and reduce contact area with the electrolyte, thereby further reducing the side reactions at the interface between positive electrode and electrolyte, reducing dissolution of manganese ions, and reducing the oxygen defect and rock-salt phase contents.

In some embodiments, particle morphology of the lithium-nickel-manganese-containing composite oxide is single crystal or quasi-single crystal, and optionally single crystal. The lithium-nickel-manganese-containing composite oxide provided in this application consists of particles with single crystal or quasi-single crystal morphology. The particle with single crystal morphology contains no grain boundary inside, and the particle with quasi-single crystal morphology is formed by agglomeration of several or a dozen of grains with very few grain boundaries inside, which can effectively reduce cracking of the particles during cold pressing and use, thereby improving overall performance of the secondary battery.

In this application, "grain (grain)" and "particle (particle)" are two entirely different concepts. Particle in this application is an agglomerate that cannot be further dispersed through ultrasonic dispersion or the like, and may be formed by agglomeration of one or more grains. When the particle is formed by one grain, the particle is a single crystal. When the particle is formed by agglomeration of a plurality of grains, the particle is a polycrystal. In this application, the term "quasi-single crystal" refers to a particle formed by agglomeration of several or a dozen of grains.

In some embodiments, the shell of the lithium-nickel-manganese-containing composite oxide includes lithium aluminum phosphate and aluminum phosphate. The aluminum phosphate has poor lithium ion conductivity, which affects the extractable capacity of the material. The lithium aluminum phosphate can construct lithium ion conduction channels, thereby avoiding capacity reduction caused by the shell enveloping the surface of the core, and even improving charge and discharge efficiency of the material. The shell including both the lithium aluminum phosphate and the aluminum phosphate can give play to the facilitating effect of the lithium aluminum phosphate on conduction of lithium ions as well as the stabilizing effect of the aluminum phosphate on the positive electrode interface, and thus the shell can not only isolate the electrolyte and reduce the side reactions at the interface between positive electrode and electrolyte, but also conduct lithium ions, avoiding capacity reduction caused by the shell enveloping the surface of the core.

The lithium aluminum phosphate has poorer stability than the aluminum phosphate, which easily leads to an unstable positive electrode interface, and in turn may affect the cycling performance and storage performance of the secondary battery. Therefore, its content should not be excessively high. In some embodiments, the shell includes lithium aluminum phosphate and aluminum phosphate, and based on a total weight of element P in the shell, a percentage of element P in the lithium aluminum phosphate in the shell is greater than 0 and less than or equal to 50wt%, and optionally 10wt%-35wt%, 10wt%-30wt%, or 10wt%-25wt%. This can give full play to the facilitating effect of the lithium aluminum phosphate on conduction of lithium ions as well as the stabilizing effect of the aluminum phosphate on the positive electrode interface, and thus the shell has high structural stability, which can not only isolate the electrolyte and reduce the side reactions at the interface between positive electrode and electrolyte, but also conduct lithium ions.

In some embodiments, the lithium aluminum phosphate is embedded in the shell (for example, embedded in the aluminum phosphate) and discretely distributed, which helps to better construct lithium ion conduction channels, avoiding capacity reduction caused by the shell enveloping the surface of the core.

The aluminum phosphate and the lithium aluminum phosphate may be crystalline, amorphous, or both crystalline and amorphous. In some embodiments, optionally, the aluminum phosphate and the lithium aluminum phosphate are both crystalline. This helps to further improve the structural stability of the shell, thereby better isolating the electrolyte, reducing the side reactions at the interface between positive electrode and electrolyte, and helping to better conduct lithium ions.

In some embodiments, the shell has a uniform and continuous thickness. This can better stabilize the interface between positive electrode and electrolyte, reduce dissolution of manganese ions, and allow the shell to have uniform lithium ion conduction channels, improving the charge and discharge efficiency. In some embodiments, the shell may be generated in-situ on the surface of the core, so that the shell has a uniform and continuous thickness.

In some embodiments, thickness of the shell is below 30 nm, optionally 5 nm-30 nm, and more optionally 5 nm-20 nm, 5 nm-15 nm, or 5 nm-10 nm. The shell enveloping the surface of the core can effectively isolate the electrolyte, reduce the side reactions at the interface between positive electrode and electrolyte, and reduce dissolution of manganese ions. The thickness of the shell being within a suitable range can reduce the side reactions at the interface between positive electrode and electrolyte without affecting the extractable capacity, and even construct good lithium ion conduction channels, improving the charge and discharge efficiency of the material. The shell being excessively thick may significantly reduce the extractable capacity of the material. In addition, the shell should not be excessively thin, because in this circumstance, the shell is prone to falling off and losing its protective function.

In some embodiments, a particle size by volume $D_v50$ of the lithium-nickel-manganese-containing composite oxide is 5 $\mu$m-15 $\mu$m, and optionally 5 $\mu$m-10 $\mu$m.

In some embodiments, a span $(D_v90 - D_v10)/D_v50$ of the lithium-nickel-manganese-containing composite oxide is $\leq 1.0$, and optionally $(D_v90 - D_v10)/D_v50$ is $\leq 0.9$, $(D_v90 - D_v10)/D_v50$ is $\leq 0.8$, $(D_v90 - D_v10)/D_v50$ is $\leq 0.7$, or $(D_v90 - D_v10)/D_v50$ is $\leq 0.6$.

In some embodiments, a BET specific surface area of the lithium-nickel-manganese-containing composite oxide is 0.3 $m^2$/g-1.0 $m^2$/g, and optionally 0.3 $m^2$/g-0.7 $m^2$/g.

The lithium-nickel-manganese-containing composite oxide has large primary particles, a small BET specific surface area, narrow particle size distribution, and high consistency, which can effectively reduce the side reactions at the interface between positive electrode and electrolyte, and helps to improve the cycling performance and storage performance of the secondary battery.

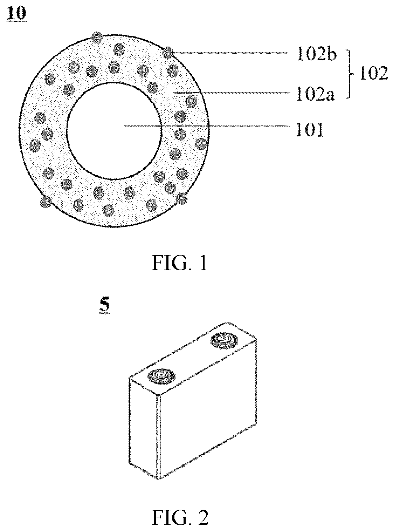

The following describes the lithium-nickel-manganese-containing composite oxide provided in this application with reference to the accompanying drawings. FIG. 1 is a schematic diagram of a lithium-nickel-manganese-containing composite oxide 10 of this application. As shown in FIG. 1, the lithium-nickel-manganese-containing composite oxide 10 includes a core 101 and a shell 102 enveloping surface of the core 101, the shell 102 includes aluminum phosphate 102a and lithium aluminum phosphate 102b, and the lithium aluminum phosphate 102b may be embedded in the shell 102 and discretely distributed.

## Preparation method

A second aspect of the embodiments of this application provides a method for preparing lithium-nickel-manganese-containing composite oxide, which can prepare the lithium-nickel-manganese-containing composite oxide according to the first aspect of the embodiments of this application.

The preparation method includes the following steps: S1. mixing a source of element Ni, a source of element Mn, a source of element M, and a source of element Li at a predetermined ratio to obtain a mixture; S2. heating the mixture obtained in S1 to a first temperature $T_1$ in an oxygen-containing atmosphere at a first pressure $P_1$ and maintaining the temperature for a first time $t_1$, to obtain a core after completion; S3, adding the core obtained in S2 to a solution containing aluminum salt and phosphate, and adjusting pH to make the aluminum salt react with the phosphate, to obtain a mixed solution after completion; S4. performing solid-liquid separation on the mixed solution obtained in S3, followed by drying and sieving, to obtain an intermediate product; and S5. mixing the intermediate product obtained in S4 and the source of element Li at a predetermined ratio, heating the mixture to a second temperature $T_2$ in the oxygen-containing atmosphere at a second pressure $P_2$, and maintaining the temperature for a second time $t_2$, to obtain a lithium-nickel-manganese-containing composite oxide after completion, where the lithium-nickel-manganese-containing composite oxide has a core-shell structure and includes a core and a shell enveloping surface of the core, where the core includes $Li_x(Ni_yMn_{2-y})_{1-m}M_mO_4$, where M includes one or more selected from Mg, elements from group IVB to group VIB, elements from group IIIA to group VA, and lanthanide elements, and optionally includes one or more elements selected from Zr, W, Sb, P, Ti, B, Ta, Nb, Ce, Al, Mo, and Mg, where $0.95 \leq x \leq 1.10$, $0.40 \leq y \leq 0.60$, and $0.001 \leq m \leq 0.015$; and the shell includes lithium aluminum phosphate, and optionally includes lithium aluminum phosphate and aluminum phosphate.

The preparation method provided in this application can achieve preparation of a lithium-nickel-manganese-containing composite oxide at low sintering temperature. In addition, it can effectively control morphology of the product, reduce oxygen defect and rock-salt phase contents, improve crystal structure stability, reduce side reactions at the interface between positive electrode and electrolyte, and reduce dissolution of manganese ions.

In S1, the sources of the elements may be compounds known in the art that can be used to prepare lithium-nickel-manganese-containing composite oxide. In some embodiments, in S1, the source of element Ni and the source of element Mn are nickel manganese hydroxides. In some embodiments, in S1, the source of element M includes one or more selected from nitrate, hydrochloride, sulfate, carbonate, and acetate of element M. In some embodiments, in S1, the source of element Li includes one or more selected from lithium hydroxide, lithium carbonate, and lithium oxide.

In some embodiments, in S1, a ratio of a substance amount of element Li to a total substance amount of elements Ni and Mn in the mixture is (0.45-0.55): 1.

In some embodiments, in S1, a ratio of a substance amount of element Li to a substance amount of element M in the mixture is 1:(0.001-0.015), and optionally 1:(0.003-0.007). This can improve the crystal structure stability, reduce dissolution of manganese ions, reduce the oxygen defect and rock-salt phase contents, and improve the lithium ion diffusion coefficient.

In some embodiments, in S1, the mixing may be performed in a ploughshare mixer, a high-speed mixer, or an inclined mixer.

In some embodiments, in S2, a temperature rise velocity is $\leq 5°$C/min, and optionally $\leq 3°$C/min. The temperature rise velocity affects heating of the particles during crystallization. A smaller temperature rise velocity can result in more uniform heating and lower oxygen defect content during growth of the particles, which helps to make the obtained lithium-nickel-manganese-containing composite oxide have more uniform primary particles with narrower particle size distribution.

In some embodiments, in S2, an oxygen concentration of the oxygen-containing atmosphere is > 60vol%, and optionally 80vol%-100vol%; and/or the first pressure $P_1$ is 0.02 MPa-0.08 MPa relative to atmospheric pressure, and optionally 0.02 MPa-0.04 MPa. This can reduce a proportion of small particles in the product, and help to reduce the oxygen defect content in the obtained lithium-nickel-manganese-containing composite oxide.

In some embodiments, in S2, the first temperature $T_1$ is 500°C-1200°C, for example, may be about 550°C, about 600°C, about 700°C, about 800°C, about 900°C, about 1000°C, about 1100°C, about 1200°C, or within any range defined by any of these values. Optionally, the first temperature $T_1$ is 700°C-1200°C, 800°C-1200°C, 900°C-1200°C, or 1000°C-1200°C.

In some embodiments, in S2, the first time $t_1$ is 5 h-40 h, and optionally 5 h-30 h, 10 h-30 h, or 10 h-20 h.

The first temperature and/or the first time being within a suitable range helps to adjust the particle morphology, size, and span of the obtained lithium-nickel-manganese-containing composite oxide.

In some embodiments, the preparation method may further include the step: after S2 and before S3, crushing and sieving the core obtained in S2 to obtain powder. Optionally, the crushing is ball milling crushing or air flow milling crushing. Optionally, the crushing may be performed using a planetary ball mill.

In some embodiments, in S3, the aluminum salt includes one or more selected from aluminum nitrate, aluminum chloride, aluminum sulfate, and aluminum carbonate.

In some embodiments, in S3, the phosphate includes one or more selected from ammonium hydrogen phosphate, ammonium dihydrogen phosphate, and ammonium phosphate.

In some embodiments, in S3, the aluminum salt and the phosphate may be added to the solvent simultaneously or separately. The solvent used is a solvent commonly used in the art. For example, the solvent may be water (for example, deionized water) or an organic solvent (for example, ethanol).

In some embodiments, in S3, the core obtained in S2 is added to the aluminum salt solution, then the phosphate solution is added, and the pH is adjusted to make the aluminum salt react with the phosphate, to obtain the mixed solution after completion. The core material is insoluble in the aluminum salt solution, such that a uniform layer of aluminum ions can be attached to the surface of the core material, forming an atomic-level coating on the core. This can generate a coating layer in-situ on the surface of the core, and the coating layer is more compact with a more uniform thickness.

In some embodiments, in S3, the pH for reaction between the aluminum salt and the phosphate is controlled to be 5-9, and optionally 6-8, which can obtain an aluminum phosphate coating layer that is compact with a uniform thickness. It should be noted that in this application, the pH can be adjusted by using a method commonly used in the art, for example, by adding an acid or alkali to a reaction system. When the pH is excessively low, the aluminum salt and the phosphate cannot react to form aluminum phosphate. When the pH is excessively high, the aluminum salt is prone to forming an aluminum hydroxide precipitate with hydroxide ions instead of aluminum phosphate.

In some embodiments, in S3, a ratio of a substance amount of element Al in the aluminum salt to a substance amount of element P in the phosphate is 1: 1; and/or based on a mass of the core, the phosphate is added in an amount such that a mass of element P is 0.05wt%-1wt%, and optionally 0.1wt%-0.5wt%.

In some embodiments, in S5, the mixing may be performed in a ploughshare mixer, a high-speed mixer, or an inclined mixer.

In some embodiments, in S5, the source of element Li includes one or more selected from lithium hydroxide, lithium carbonate, and lithium oxide.

In some embodiments, in S5, a temperature rise velocity is ≤5°C/min, and optionally ≤3°C/min. The temperature rise velocity affects heating of the particles during crystallization. A small temperature rise velocity can result in more uniform heating during growth of the particles, which helps to make the obtained lithium-nickel-manganese-containing composite oxide have more uniform primary particles with narrower particle size distribution, and can compensate for the oxygen defects in the core.

In some embodiments, in S5, an oxygen concentration of the oxygen-containing atmosphere is > 60vol%, and optionally 80vol%-100vol%; and/or the second pressure $P_2$ is 0.02 MPa-0.08 MPa relative to atmospheric pressure, and optionally 0.02 MPa-0.04 MPa.

The oxygen concentration of the oxygen-containing atmosphere and/or the second pressure being within a suitable range can reduce a proportion of small particles in the product, and compensate for the oxygen defects in the core, thereby further reducing the oxygen defects in the obtained lithium-nickel-manganese-containing composite oxide, effectively reducing the $Mn^{3+}$ content, reducing dissolution of manganese ions, and reducing the rock-salt phase content. In addition, this helps the aluminum phosphate to react with the source of element Li to form a coating layer that is compact with a uniform thickness.

In some embodiments, in S5, the second temperature $T_2$ is 400°C-700°C, for example, may be about 400°C, about 500°C, about 600°C, about 700°C, or within any range defined by any of these values. Optionally, the second

temperature $T_2$ is 500°C-700°C.

In some embodiments, in S5, the second time $t_2$ is 5 h-40 h, and optionally 5 h-30 h, 10 h-30 h, or 10 h-20 h.

The second temperature and/or the second time being within a suitable range helps to compensate for the oxygen defects in the core, improves the coating effect of the shell layer, and can obtain a coating layer that is compact with a uniform thickness. In addition, this helps to form lithium aluminum phosphate and aluminum phosphate with higher crystalline content, and thus can further improve the structural stability of the shell, thereby better isolating the electrolyte, reducing the side reactions at the interface between positive electrode and electrolyte, and helping to better conduct lithium ions.

In some embodiments, a ratio of a substance amount of element Li in the source of element Li in S5 to a substance amount of element P in the phosphate in S3 is $\leq 0.75$, and optionally $\leq 0.525$, $\leq 0.450$, or $\leq 0.375$. This allows the generated lithium aluminum phosphate to be embedded in the aluminum phosphate coating layer and discretely distributed, which in turn helps the lithium aluminum phosphate to construct lithium ion conduction channels, avoiding capacity reduction caused by the shell enveloping the surface of the core.

In some embodiments, the preparation method may further include the step: crushing and sieving the product obtained in S5. Optionally, the crushing is ball milling crushing or air flow milling crushing. Optionally, the crushing may be performed using a planetary ball mill.

In some embodiments, the preparation method includes the following steps: mixing nickel manganese hydroxides, a source of element M, and a source of element Li at a predetermined ratio to obtain a mixture; S2. heating the mixture obtained in S1 to 500°C-1200°C in an oxygen-containing atmosphere with an oxygen concentration of > 60vol% and optionally 80vol%-100vol% at a first pressure $P_1$ of 0.02 MPa-0.08 MPa relative to atmospheric pressure and optionally 0.02 MPa-0.04 MPa and maintaining the temperature for 5 h-40 h, to obtain a core after completion; S3, adding the core obtained in S2 to an aluminum salt solution, then adding a phosphate solution, and adjusting pH to make the aluminum salt react with the phosphate, to obtain a mixed solution after completion; S4. performing solid-liquid separation on the mixed solution obtained in S3, followed by drying and sieving, to obtain an intermediate product; and S5. mixing the intermediate product obtained in S4 and the source of element Li at a predetermined ratio, and heating to 400°C-700°C in the oxygen-containing atmosphere with an oxygen concentration of > 60vol% and optionally 80vol%-100vol% at a second pressure $P_2$ of 0.02 MPa-0.08 MPa relative to atmospheric pressure and optionally 0.02 MPa-0.04 MPa and maintaining the temperature for 5 h-40 h, to obtain a lithium-nickel-manganese-containing composite oxide after completion, where the lithium-nickel-manganese-containing composite oxide has a core-shell structure and includes a core and a shell enveloping surface of the core, where the core includes $Li_x(Ni_yMn_{2-y})_{1-m}M_mO_4$, where M includes one or more selected from Mg, elements from group IVB to group VIB, elements from group IIIA to group VA, and lanthanide elements, and optionally includes one or more elements selected from Zr, W, Sb, P, Ti, B, Ta, Nb, Ce, Al, Mo, and Mg, where $0.95 \leq x \leq 1.10$, $0.40 \leq y \leq 0.60$, and $0.001 \leq m \leq 0.015$; and the shell includes lithium aluminum phosphate, and optionally includes lithium aluminum phosphate and aluminum phosphate.

For some parameters (for example, type and content of the doping element) of the lithium-nickel-manganese-containing composite oxide involved in the preparation of the lithium-nickel-manganese-containing composite oxide in this application, reference may be made to the lithium-nickel-manganese-containing composite oxide according to the first aspect of this application. Details are not described herein again.

Unless otherwise specified, the raw materials used in the preparation method according to the second aspect of this application are all commercially available.

**Positive electrode plate**

A third aspect of the embodiments of this application provides a positive electrode plate including a positive electrode current collector and a positive electrode film layer disposed on at least one surface of the positive electrode current collector, where the positive electrode film layer includes the lithium-nickel-manganese-containing composite oxide according to the first aspect of this application or a lithium-nickel-manganese-containing composite oxide prepared by using the preparation method according to the second aspect of this application. Based on a total weight of the positive electrode film layer, a percentage of the lithium-nickel-manganese-containing composite oxide in the positive electrode film layer is 1wt%-99wt%, and optionally 85wt%-99wt%. The positive electrode current collector has two opposite surfaces in its thickness direction, and the positive electrode film layer is disposed on either or both of the two opposite surfaces of the positive electrode current collector.

The positive electrode film layer may further include other positive electrode active materials for secondary batteries well known in the art. For example, the other positive electrode active materials may include one or more of lithium transition metal oxide, lithium-containing phosphate, and respective modified compounds thereof. Examples of the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate may include one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof. In this application, the modified compounds of the foregoing positive electrode active materials may be obtained through doping modification and/or surface coating modification to the positive electrode active materials.

In some embodiments, the positive electrode film layer further optionally includes a positive electrode conductive agent. The positive electrode conductive agent is not limited to a particular type in this application. For example, the positive electrode conductive agent includes one or more of superconducting carbon, conductive graphite, acetylene black, carbon black, Ketjen black, carbon dots, carbon nanotubes, graphene, and carbon nanofiber.

In some embodiments, the positive electrode film layer further optionally includes a positive electrode binder. The positive electrode binder is not limited to a particular type in this application. For example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode current collector may be a metal foil current collector or a composite current collector. For example, an aluminum foil may be used as the metal foil. The composite current collector may include a polymer material matrix and a metal material layer formed on at least one surface of the polymer material matrix. For example, the metal material may include one or more of aluminum, aluminum alloy, nickel, nickel alloy, titanium, titanium alloy, silver, and silver alloy. For example, the polymer material matrix may include one or more of polypropylene (PP), polyethylene terephthalate (PET), polybutylene terephthalate (PBT), polystyrene (PS), and polyethylene (PE).

The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them to uniformity. The solvent may be but is not limited to N-methylpyrrolidone (NMP).

## Secondary battery

A fourth aspect of the embodiments of this application provides a secondary battery including the positive electrode plate according to the third aspect of this application. The secondary battery, also referred to as a rechargeable battery or a storage battery, is a battery that can be charged after being discharged to activate active materials for continuous use. Generally, the secondary battery includes an electrode assembly and an electrolyte, and the electrode assembly includes a positive electrode plate, a negative electrode plate, and a separator. During charging and discharging of the battery, lithium ions are intercalated and deintercalated between the positive electrode plate and the negative electrode plate. The separator is disposed between the positive electrode plate and the negative electrode plate to mainly prevent short circuit between a positive electrode and a negative electrode and to allow the lithium ions to pass through. The electrolyte conducts the lithium ions between the positive electrode plate and the negative electrode plate.

[Positive electrode plate]

The positive electrode plate used in the secondary battery of this application is the positive electrode plate according to any one of the embodiments of the third aspect of this application.

[Negative electrode plate]

In some embodiments, the negative electrode plate includes a negative electrode current collector and a negative electrode film layer that is disposed on at least one surface of the negative electrode current collector and includes a negative electrode active material. For example, the negative electrode current collector has two opposite surfaces in its thickness direction, and the negative electrode film layer is disposed on either or both of the two opposite surfaces of the negative electrode current collector.

The negative electrode active material may be a negative electrode active material for secondary batteries well known in the art. For example, the negative electrode active material includes but is not limited to one or more of natural graphite, artificial graphite, soft carbon, hard carbon, a silicon-based material, a tin-based material, and lithium titanate. The silicon-based material may include one or more of elemental silicon, silicon oxide, silicon-carbon composite, silicon-nitrogen composite, and a silicon alloy material. The tin-based material may include one or more of elemental tin, tin oxide, and a tin alloy material. This application is not limited to these materials, but may use other conventional well-known materials that can be used as negative electrode active materials for secondary batteries instead. One of these negative electrode active materials may be used alone, or more than two of them may be used in combination.

In some embodiments, the negative electrode film layer further optionally includes a negative electrode conductive agent. The negative electrode conductive agent is not limited to a particular type in this application. For example, the negative electrode conductive agent may include one or more of superconducting carbon, conductive graphite, acetylene black, carbon black, Ketjen black, carbon dots, carbon nanotubes, graphene, and carbon nanofiber.

In some embodiments, the negative electrode film layer further optionally includes a negative electrode binder. The negative electrode binder is not limited to a particular type in this application. For example, the negative electrode binder may include one or more of styrene-butadiene rubber (SBR), water-soluble unsaturated resin SR-1B, waterborne acrylic resin (for example, polyacrylic acid PAA, polymethylacrylic acid PMAA, and polyacrylic acid sodium PAAS), polyacrylamide (PAM), polyvinyl alcohol (PVA), sodium alginate (SA), and carboxymethyl chitosan (CMCS).

In some embodiments, the negative electrode film layer further optionally includes other additives. For example, the other additives may include a thickener, for example, sodium carboxymethyl cellulose (CMC-Na) or a PTC thermistor material.

In some embodiments, the negative electrode current collector may be a metal foil current collector or a composite current collector. For example, a copper foil may be used as the metal foil. The composite current collector may include a polymer material matrix and a metal material layer formed on at least one surface of the polymer material matrix. For example, the metal material may include one or more of copper, copper alloy, nickel, nickel alloy, titanium, titanium alloy, silver, and silver alloy. For example, the polymer material matrix may include one or more of polypropylene (PP), polyethylene terephthalate (PET), polybutylene terephthalate (PBT), polystyrene (PS), and polyethylene (PE).

The negative electrode film layer is typically formed by applying a negative electrode slurry onto the negative electrode current collector, followed by drying and cold pressing. The negative electrode slurry is typically formed by dispersing the negative electrode active material, the optional conductive agent, the optional binder, and the optional other additives in a solvent and stirring them to uniformity. The solvent may be but is not limited to N-methylpyrrolidone (NMP) or deionized water.

The negative electrode plate does not exclude additional functional layers other than the negative electrode film layer. For example, in some embodiments, the negative electrode plate of this application further includes a conductive primer layer (for example, consisting of a conductive agent and a binder) disposed on the surface of the negative electrode current collector and sandwiched between the negative electrode current collector and the negative electrode film layer. In some other embodiments, the negative electrode plate of this application further includes a protective layer covering the surface of the negative electrode film layer.

[Electrolyte]

The electrolyte is not limited to a specific type in this application, and can be selected based on needs. For example, the electrolyte may include at least one selected from a solid electrolyte and a liquid electrolyte (that is, an electrolyte solution).

In some embodiments, the electrolyte is a liquid electrolyte, and the liquid electrolyte includes an electrolytic salt and a solvent.

The electrolytic salt is not limited to a specific type, and can be selected based on actual needs. In some embodiments, for example, the electrolytic salt may include one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethane)sulfonimide (LiTFSI), lithium trifluoromethanesulfonate (LiTFS), lithium difluoro(oxalato)borate (LiDFOB), lithium bis(oxalato)borate (LiBOB), lithium difluorophosphate ($LiPO_2F_2$), lithium difluoro bis(oxalato)phosphate (LiDFOP), and lithium tetrafluoro oxalato phosphate (LiTFOP).

The solvent is not limited to a specific type, and can be selected based on actual needs. In some embodiments, for example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), ethyl methanesulfonate (EMS), and diethyl sulfone (ESE).

In some embodiments, the liquid electrolyte further optionally includes an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature power performance of the battery.

[Separator]

Secondary batteries using a liquid electrolyte and some secondary batteries using a solid electrolyte further include a separator. The separator is disposed between the positive electrode plate and the negative electrode plate to mainly prevent short circuit between a positive electrode and a negative electrode and to allow the lithium ions to pass through. The separator is not limited to a particular type in this application, and may be any well-known porous separator with good chemical stability and mechanical stability.

In some embodiments, material of the separator may include one or more of glass fiber, non-woven fabric, polyethylene, polypropylene, and polyvinylidene fluoride. The separator may be a single-layer film or a multi-layer composite film. When the separator is a multi-layer composite film, all layers may be made of the same or different materials.

In some embodiments, the positive electrode plate, the separator, and the negative electrode plate may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, for example, one or more of polypropylene (PP), polybutylene terephthalate (PBT), and polybutylene succinate (PBS).

The secondary battery is not limited to a particular shape in this application, and may be cylindrical, rectangular, or of any other shapes. FIG. 2 shows a rectangular secondary battery 5 as an example.

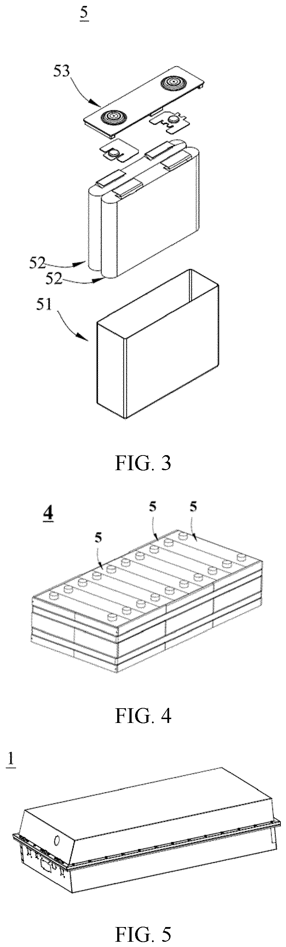

In some embodiments, as shown in FIG. 3, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 is configured to cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The secondary battery 5 may include one or more electrode assemblies 52, and the quantity may be adjusted as required.

The preparation method of secondary battery of this application is well known. In some embodiments, the positive electrode plate, the separator, the negative electrode plate, and the electrolyte may be assembled to form a secondary battery. For example, the positive electrode plate, the separator, and the negative electrode plate may be made into an electrode assembly through winding or lamination; and the electrode assembly is placed into an outer package, followed by drying, and the electrolyte is injected, followed by processes such as vacuum packaging, standing, formation, and shaping, to obtain the secondary battery.

In some embodiments of this application, such secondary batteries of this application may be assembled into a battery module, and the battery module may include a plurality of secondary batteries. A specific quantity may be adjusted based on application and capacity of the battery module.

FIG. 4 is a schematic diagram of a battery module 4 as an example. As shown in FIG. 4, in the battery module 4, a plurality of secondary batteries 5 may be sequentially arranged in a length direction of the battery module 4. Certainly, the batteries may alternatively be arranged in any other manners. Further, the plurality of secondary batteries 5 may be fixed by fasteners.

Optionally, the battery module 4 may further include a shell with an accommodating space, and the plurality of secondary batteries 5 are accommodated in the accommodating space.

In some embodiments, the battery modules may be further assembled into a battery pack, and a quantity of battery modules included in the battery pack may be adjusted based on application and capacity of the battery pack.

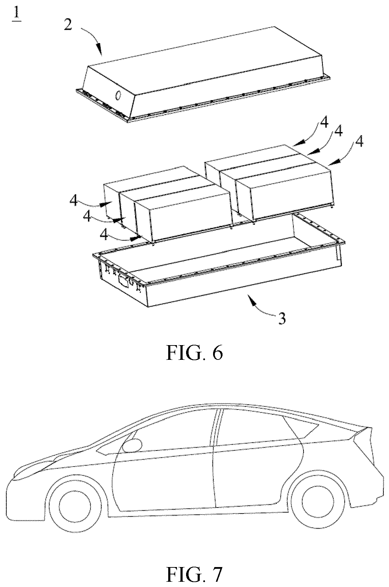

FIG. 5 and FIG. 6 are schematic diagrams of a battery pack 1 as an example. As shown in FIG. 5 and FIG. 6, the battery pack 1 may include a battery box and a plurality of battery modules 4 arranged in the battery box. The battery box includes an upper box body 2 and a lower box body 3. The upper box body 2 is configured to cover the lower box body 3 to form an enclosed space for accommodating the battery modules 4. The plurality of battery modules 4 may be arranged in the battery box in any manner.

**Electric apparatus**

A fifth aspect of the embodiments of this application further provides an electric apparatus. The electric apparatus includes at least one of the secondary battery, the battery module, or the battery pack of this application. The secondary battery, the battery module, or the battery pack may be used as a power source of the electric apparatus or an energy storage unit of the electric apparatus. The electric apparatus may be but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The secondary battery, the battery module, or the battery pack may be selected for the electric apparatus based on requirements for using the electric apparatus.

FIG. 7 is a schematic diagram of an electric apparatus as an example. The electric apparatus is a battery electric vehicle, a hybrid electric vehicle, a plug-in hybrid electric vehicle, or the like. To satisfy requirements of the electric apparatus for high power and high energy density, a battery pack or a battery module may be used.

In another example, the electric apparatus may be a mobile phone, a tablet computer, a notebook computer, or the like. Such electric apparatus is generally required to be light and thin and may use a secondary battery as its power source.

## Examples

Content disclosed in this application is described in detail in the following examples. These examples are only for illustrative purposes because various modifications and changes made without departing from the scope of the content disclosed in this application are apparent to persons skilled in the art. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

### Example 1

(1) Preparation of lithium-nickel-manganese-containing composite oxide

S1. According to a core target composition of $Li(Ni_{0.5}Mn_{1.5})_{0.996}Nb_{0.004}O_4$, $Ni_{0.5}Mn_{1.5}(OH)_4$ (as the sources of elements Ni and Mn), $Li_2CO_3$ (as the source of element Li), and $Nb_2O_5$ (as the source of element M) were weighed at a corresponding stoichiometric ratio and mixed well in a ploughshare mixer to obtain a mixture.

S2. The foregoing mixture was placed into a kiln, heated to 1000°C at a velocity of 1°C/min in an oxygen concentration of 95vol% at a kiln pressure $P_1$ of 0.03 MPa relative to atmospheric pressure and maintained at that temperature for 10 h, and cooled to room temperature after completion, to obtain a core. The element contents in the core can be measured in accordance with EPA 6010D-2014 by using an inductively coupled plasma emission spectrometer (ICP).

S3. The obtained core was ball-milled into powder using a planetary ball mill and added to an aluminum nitrate aqueous solution, then an ammonium phosphate aqueous solution was added, and pH of the reaction solution was adjusted to 7 to make the aluminum nitrate react with the ammonium phosphate, to obtain a mixed solution after completion. A molar ratio of the aluminum nitrate used to the ammonium phosphate used was 1:1, and based on a mass of the core, the ammonium phosphate was added in an amount such that a mass of element P was 0.30wt%.

S4. The obtained mixed solution was centrifuged and then dried and sieved to obtain an intermediate product.

S5. The obtained intermediate product and LiOH were mixed well at a Li/P molar ratio of 0.15:1 in the ploughshare mixer, and then the foregoing mixture was placed into the kiln, heated to 700°C at a velocity of 1°C/min in an oxygen concentration of 95vol% at a kiln pressure $P_2$ of 0.03 MPa relative to atmospheric pressure and maintained at that temperature for 10 h, and subjected to air flow crushing after completion, to obtain a lithium-nickel-manganese-containing composite oxide.

(2) Preparation of button battery (half cell)

The foregoing prepared lithium-nickel-manganese-containing composite oxide, conductive carbon black, and polyvinylidene fluoride were mixed at a weight ratio of 90:5:5, an appropriate amount of solvent NMP was added, and the mixture was stirred to obtain a uniform positive electrode slurry. The positive electrode slurry was applied onto positive electrode current collector aluminum foil, followed by drying, to obtain a positive electrode plate. A loading amount of the lithium-nickel-manganese-containing composite oxide on the positive electrode plate was 0.015 g/cm².

A lithium sheet used as a counter electrode, a solution containing ethylene carbonate (EC), diethyl carbonate (DEC), and dimethyl carbonate (DMC) at a volume ratio of 1:1:1 and 1 mol/L $LiPF_6$ used as an electrolyte, a 12 $\mu$m thick polypropylene film used as a separator, and the foregoing prepared positive electrode plate were assembled together in a button battery box to form a CR2030 button battery and left standing for 24 hours to obtain a half cell.

(3) Preparation of secondary battery (full cell)

The foregoing prepared lithium-nickel-manganese-containing composite oxide, conductive carbon black, and polyvinylidene fluoride were mixed at a weight ratio of 96:2.5:1.5, an appropriate amount of solvent NMP was added, and the mixture was stirred to obtain a uniform positive electrode slurry. The positive electrode slurry was applied onto two surfaces of positive electrode current collector aluminum foil, followed by drying and cold pressing, to obtain a positive electrode plate.

Negative electrode active material artificial graphite, conductive agent carbon black (Super P), binder styrene-butadiene rubber, and thickener sodium carboxymethyl cellulose were fully stirred and mixed at a weight ratio of 96:1:1:2 in an appropriate amount of solvent deionized water to form a negative electrode slurry. The negative electrode slurry was applied onto two surfaces of negative electrode current collector copper foil, followed by drying and cold pressing, to obtain a negative electrode plate.

A 12 $\mu$m thick polypropylene film used as a separator and the foregoing prepared positive electrode plate and negative electrode plate were sequentially placed so that the separator was located between the positive electrode plate and the negative electrode plate for separation, and then the resulting stack was wound to obtain an electrode assembly. The electrode assembly was placed into an outer package aluminum-plastic bag and dried, and then a same electrolyte as that used for preparing the foregoing button battery was injected, followed by processes such as vacuum packaging, standing, formation, and capacity testing, to obtain a secondary battery.

**Examples 2 to 33**

Preparation of the button battery and the secondary battery was the same as that in Example 1 except for preparation of the lithium-nickel-manganese-containing composite oxide. For the detailed differences in the preparation of the lithium-nickel-manganese-containing composite oxide, refer to Table 1.

**Comparative Example 1**

Preparation of the button battery and the secondary battery was the same as that in Example 1 except for preparation of the lithium-nickel-manganese-containing composite oxide.

$Ni_{0.5}Mn_{1.5}(OH)_4$ and $Li_2CO_3$ were mixed well at a molar ratio of 1:0.5 in the ploughshare mixer to obtain a mixture. The foregoing mixture was placed into the kiln, heated to 1000°C at a velocity of 1°C/min in an oxygen concentration of 95vol% at a kiln pressure $P_1$ of 0.03 MPa relative to atmospheric pressure and maintained at that temperature for 10 h, and subjected to air flow crushing after completion, to obtain a lithium-nickel-manganese-containing composite oxide.

**Comparative Example 2**

Preparation of the button battery and the secondary battery was the same as that in Example 1 except for preparation of the lithium-nickel-manganese-containing composite oxide.

According to a target composition of $Li(Ni_{0.5}Mn_{1.5})_{0.996}Nb_{0.004}O_4$, $Ni_{0.5}Mn_{1.5}(OH)_4$ (as the sources of elements Ni and Mn), $Li_2CO_3$ (as the source of element Li), and $Nb_2O_5$ (as the source of element M) were weighed at a corresponding stoichiometric ratio and mixed well in the ploughshare mixer to obtain a mixture. The foregoing mixture was placed into the kiln, heated to 1000°C at a velocity of 1°C/min in an oxygen concentration of 95vol% at a kiln pressure $P_1$ of 0.03 MPa relative to atmospheric pressure and maintained at that temperature for 10 h, and subjected to air flow crushing after completion, to obtain a lithium-nickel-manganese-containing composite oxide.

**Comparative Example 3**

Preparation of the button battery and the secondary battery was the same as that in Example 1 except for preparation of the lithium-nickel-manganese-containing composite oxide.

$Ni_{0.5}Mn_{1.5}(OH)_4$ and $Li_2CO_3$ were mixed well at a molar ratio of 1:0.5 in the ploughshare mixer to obtain a mixture. The foregoing mixture was placed into the kiln, heated to 1000°C at a velocity of 1°C/min in an oxygen concentration of 95vol% at a kiln pressure $P_1$ of 0.03 MPa relative to atmospheric pressure and maintained at that temperature for 10 h, and cooled to room temperature after completion, to obtain a core. The obtained core was ball-milled into powder using the planetary ball mill and added to an aluminum nitrate aqueous solution, then an ammonium phosphate aqueous solution was added, and pH of the reaction solution was adjusted to 7 to make the aluminum nitrate react with the ammonium phosphate, to obtain a mixed solution after completion. The obtained mixed solution was centrifuged and then dried and sieved to obtain an intermediate product. The obtained intermediate product and LiOH were mixed well at a Li/P molar ratio of 0.15: 1 in the ploughshare mixer, and then the foregoing mixture was placed into the kiln, heated to 700°C at a velocity of 1°C/min in an oxygen concentration of 95vol% at a kiln pressure $P_2$ of 0.03 MPa relative to atmospheric pressure and maintained at that temperature for 10 h, and subjected to air flow crushing after completion, to obtain a lithium-nickel-manganese-containing composite oxide.

**Comparative Example 4**

Preparation of the button battery and the secondary battery was the same as that in Example 1 except for preparation of the lithium-nickel-manganese-containing composite oxide.

According to a core target composition of $Li(Ni_{0.5}Mn_{1.5})_{0.996}Nb_{0.004}O_4$, $Ni_{0.5}Mn_{1.5}(OH)_4$ (as the sources of elements Ni and Mn), $Li_2CO_3$ (as the source of element Li), and $Nb_2O_5$ (as the source of element M) were weighed at a corresponding stoichiometric ratio and mixed well in the ploughshare mixer to obtain a mixture. The foregoing mixture was placed into the kiln, heated to 1000°C at a velocity of 1°C/min in an oxygen concentration of 95vol% at a kiln pressure $P_1$ of 0.03 MPa relative to atmospheric pressure and maintained at that temperature for 10 h, and cooled to room temperature after completion, to obtain a core. The obtained core was ball-milled into powder using the planetary ball mill and added to an aluminum nitrate aqueous solution, then an ammonium phosphate aqueous solution was added, and pH of the reaction solution was adjusted to 7 to make the aluminum nitrate react with the ammonium phosphate, to obtain a mixed solution after completion. The obtained mixed solution was centrifuged and then dried and sieved to obtain an intermediate product. The obtained intermediate product was placed into the kiln, heated to 700°C at a velocity of 1°C/min in an oxygen concentration of 95vol% at a kiln pressure $P_2$ of 0.03 MPa relative to atmospheric pressure and maintained at that temperature for 10 h, and subjected to air flow crushing after completion, to obtain a lithium-nickel-manganese-containing composite oxide.

**Comparative Examples 5 to 10**

Preparation of the button battery and the secondary battery was the same as that in Example 1 except for preparation of the lithium-nickel-manganese-containing composite oxide. For the detailed differences in the preparation of the lithium-nickel-manganese-containing composite oxide, refer to Table 1.

Tests

(1) Morphology test of lithium-nickel-manganese-containing composite oxide

The foregoing prepared lithium-nickel-manganese-containing composite oxide was tested by using a scanning electron microscope in accordance with JY/T010-1996, and then the sample morphology was observed. The test instrument may be ZEISS sigma 300.

(2) Thickness test of shell of lithium-nickel-manganese-containing composite oxide

In this application, the thickness of the shell of the lithium-nickel-manganese-containing composite oxide has a meaning well known in the art, and can be measured by using an instrument and a method well known in the art. For example, a thin slice with a thickness of about 100 nm can be cut from the middle of a single particle of the lithium-nickel-manganese-containing composite oxide through focused ion beam, and then the test was conducted by using a transmission electron microscope and the thickness of the shell was measured. During the test, thicknesses at three positions of the selected particle can be measured to take an average value.

(3) Particle size by volume $D_v90$, $D_v50$, and $D_v10$ test of lithium-nickel-manganese-containing composite oxide

In this application, the particle sizes by volume $D_v90$, $D_v50$, and $D_v10$ of the lithium-nickel-manganese-containing composite oxide have meanings well known in the art, which indicate particle sizes of the material corresponding to cumulative volume distribution percentages reaching 90%, 50%, and 10% respectively, and can be measured by using an instrument and a method well known in the art. For example, they can be easily measured in accordance with GB/T 19077-2016 by using a laser particle size analyzer. The test instrument may be a laser particle size analyzer of Mastersizer 2000E from Malvern Instruments Ltd. of UK.

(4) BET specific surface area test of lithium-nickel-manganese-containing composite oxide

In this application, the BET specific surface area of the lithium-nickel-manganese-containing composite oxide has a meaning well known in the art, and can be measured by using an instrument and a method well known in the art. For example, it can be measured in accordance with GB/T 19587-2017 by using a nitrogen adsorption specific surface area analysis test method and calculated by using a BET method. The test instrument may be a specific surface area and pore size analyzer of Tri-Star 3020 from Micromeritics of USA.

(5) Oxygen defect content test of core of lithium-nickel-manganese-containing composite oxide

An X-ray diffraction pattern of the lithium-nickel-manganese-containing composite oxide was determined by using a powder X-ray diffractometer with Cu K$\alpha$1 ray, and a square root $(A_1/A_2)^{1/2}$ of a ratio of peak area $A_1$ of a diffraction peak at $2\theta$ of $43.7 \pm 0.2°$ to peak area $A_2$ of a diffraction peak at $2\theta$ of $18.8 \pm 0.1°$ was taken to represent the oxygen defect content in the core of the lithium-nickel-manganese-containing composite oxide. The test method included the following steps: (1) sample preparation: the sample had a slot depth of 1 mm and a diameter of 25 mm, and a flat plate sampling method was used for sample preparation; (2) testing: a starting angle was 15°, an ending angle was 70°, a step was 0.01671°, a time for each step was 0.24s, a voltage was 40 KV, a current was 40 mA, and an anti-scatter slit was 1 mm; and (3) data processing: data was processed by using X'Pert HighScore Plus to obtain the peak area $A_1$ of the diffraction peak at $2\theta$ of $43.7 \pm 0.2°$ and the peak area $A_2$ of the diffraction peak at $2\theta$ of $18.8 \pm 0.1°$. The test instrument may be a Bruker X-ray diffractometer of D8 DISCOVER. For the test standard, reference was made to JIS/K0131-1996 general rules for X-ray diffraction analysis.

(6) Initial discharge capacity measurement of button battery (half cell)

At 25°C, the foregoing prepared button battery was charged to a voltage of 4.9 V at a constant current of 0.1C, then charged to a current of 0.05C at a constant voltage of 4.9 V, left standing for 5 min, and discharged to a voltage of 3.5 V at a constant current of 0.1C. A discharge capacity obtained at that point was an initial discharge capacity of the button battery.

(7) Initial discharge capacity test of secondary battery (full cell)

At 25°C, the foregoing prepared secondary battery was charged to a voltage of 4.9 V at a constant current of 0.33C, then charged to a current of 0.05C at a constant voltage of 4.9 V, left standing for 5 min, and discharged to a voltage of 3.5 V at a constant current of 0.33C. A discharge capacity obtained at that point was an initial discharge capacity of the secondary battery.

(8) Cycling performance test of secondary battery (full cell) at 25°C

At 25°C, the foregoing prepared secondary battery was charged to a voltage of 4.9 V at a constant current of 0.33C, then charged to a current of 0.05C at a constant voltage of 4.9 V, left standing for 5 min, and discharged to a voltage of 3.5 V at a constant current of 0.33C. This was one charge and discharge cycle. A discharge capacity at that point was a discharge capacity of the secondary battery after the first cycle. Such charge and discharge cycle was repeated and a discharge capacity after each cycle was recorded.
Capacity retention rate of secondary battery after 300 cycles at 25°C = discharge capacity after 300 cycles/discharge capacity after the first cycle.

(9) Cycling performance test of secondary battery (full cell) at 45°C

At 45°C, the foregoing prepared secondary battery was charged to a voltage of 4.9 V at a constant current of 0.33C, then charged to a current of 0.05C at a constant voltage of 4.9 V, left standing for 5 min, and discharged to a voltage of 3.5 V at a constant current of 0.33C. This was one charge and discharge cycle. A discharge capacity at that point was a discharge capacity of the secondary battery after the first cycle. Such charge and discharge cycle was repeated and a discharge capacity after each cycle was recorded.
Capacity retention rate of secondary battery after 200 cycles at 45°C = discharge capacity after 200 cycles/discharge capacity after the first cycle.

(10) Storage performance test of secondary battery (full cell) at 45°C

At 25°C, the foregoing prepared secondary battery was charged to a voltage of 4.9 V at a constant current of 0.33C, and then charged to a current of 0.05C at a constant voltage of 4.9 V At that point, the secondary battery was fully charged (100% SOC). The fully-charged secondary battery was placed into a 45°C thermostat for storage until the discharge capacity was reduced to 80% of the initial discharge capacity of the secondary battery, and the test was stopped and the number of storage days was recorded.

The lithium-nickel-manganese-containing composite oxide provided in this application has a core-shell structure. The core has low oxygen defect content, high crystal structure stability, and low rock-salt phase content. The shell enveloping the surface of the core can effectively reduce side reactions at the interface between positive electrode and electrolyte and reduce dissolution of manganese ions. The shell includes both lithium aluminum phosphate and aluminum phosphate. This can give play to the facilitating effect of the lithium aluminum phosphate on conduction of lithium ions as well as the stabilizing effect of the aluminum phosphate on the positive electrode interface, and thus the shell provided in this application can not only isolate the electrolyte and reduce the side reactions at the interface between positive electrode and electrolyte, but also conduct lithium ions, avoiding capacity reduction caused by the shell enveloping the surface of the core. It can be learned from the test results in Table 2 that the secondary battery using the lithium-nickel-manganese-containing composite oxide with a core-shell structure provided in this application can have a combination of a high initial discharge capacity and good cycling performance and storage performance.

The lithium-nickel-manganese-containing composite oxides prepared in Comparative Example 1 and Comparative Example 2 do not have a core-shell structure. The lithium-nickel-manganese-containing composite oxides prepared in Comparative Example 3 and Comparative Example 4 have a core-shell structure, but the core in Comparative Example 3 does not contain the doping element provided in this application and the shell in Comparative Example 4 does not contain lithium aluminum phosphate, so the secondary battery cannot have both a high initial discharge capacity and good cycling performance and storage performance.

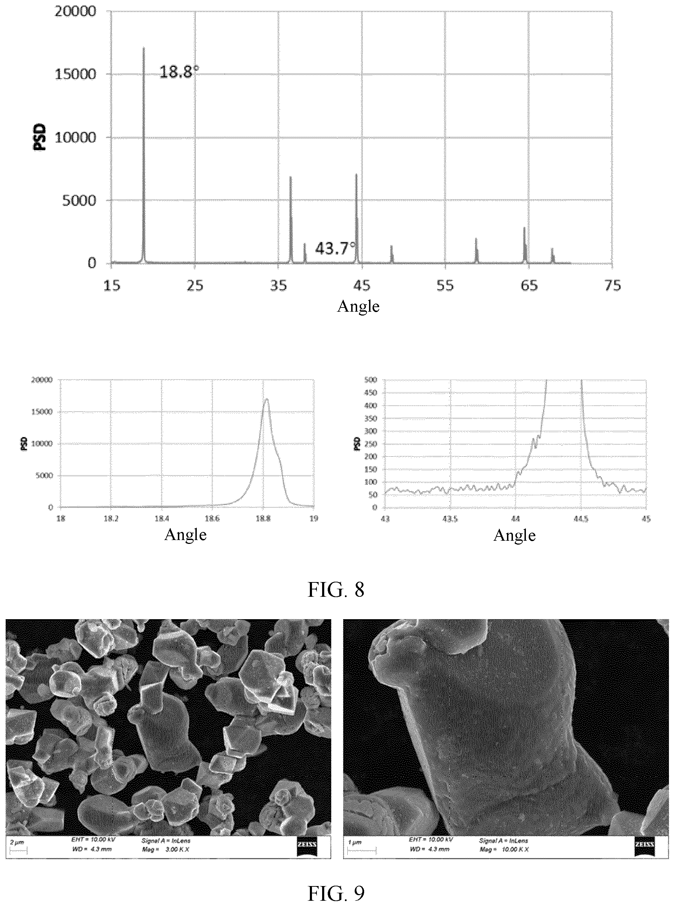

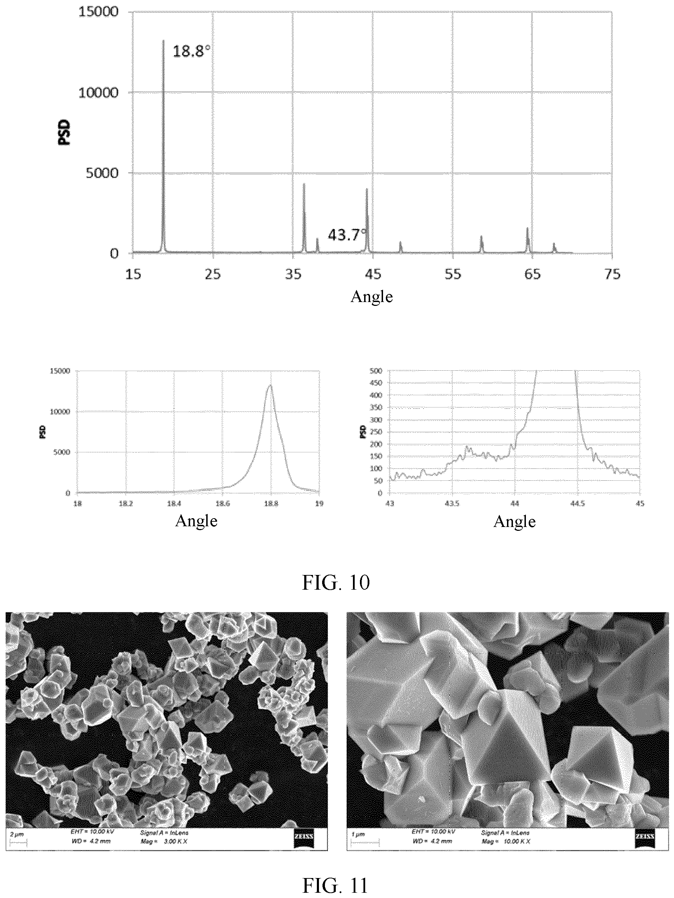

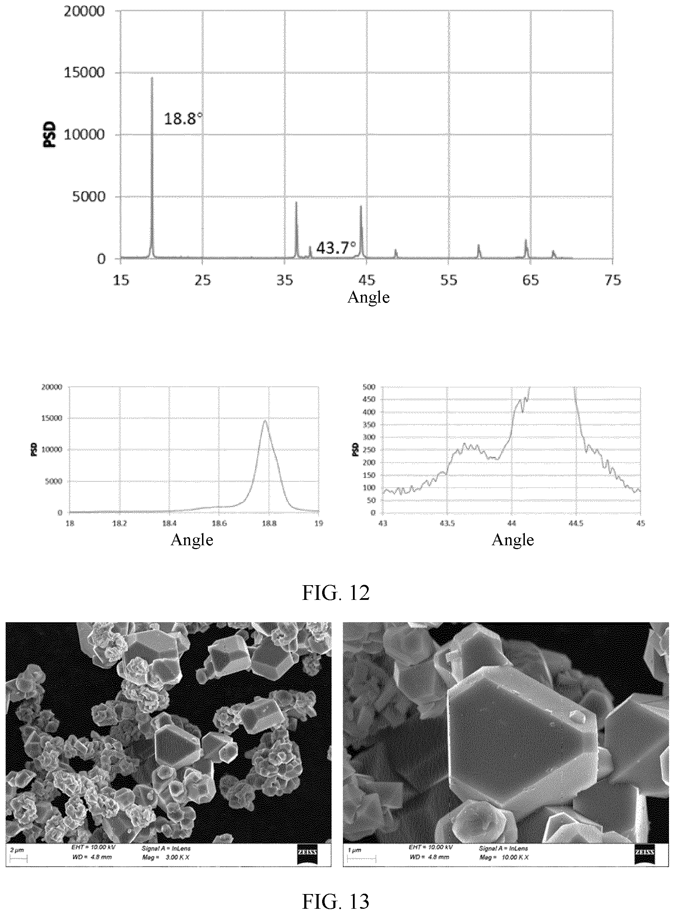

FIG. 8 is the X-ray diffraction pattern of the lithium-nickel-manganese-containing composite oxide prepared in Example 1 that is determined by using the powder X-ray diffractometer with Cu K$\alpha$1 ray. FIG. 9 is a scanning electron microscope image of the lithium-nickel-manganese-containing composite oxide prepared in Example 1. FIG. 10 is the X-ray diffraction pattern of the lithium-nickel-manganese-containing composite oxide prepared in Comparative Example 1 that is determined by using the powder X-ray diffractometer with Cu K$\alpha$1 ray. FIG. 11 is a scanning electron microscope image of the lithium-nickel-manganese-containing composite oxide prepared in Comparative Example 1. FIG. 12 is the X-ray diffraction pattern of the lithium-nickel-manganese-containing composite oxide prepared in Comparative Example 5 that is determined by using the powder X-ray diffractometer with Cu K$\alpha$1 ray. FIG. 13 is a scanning electron microscope image of the lithium-nickel-manganese-containing composite oxide prepared in Comparative Example 5. It can be learned from FIG. 8, FIG. 10, and FIG. 12 that the core of the lithium-nickel-manganese-containing composite oxide provided in this application has low oxygen defect content. It can be learned from FIG. 9, FIG. 11, and FIG. 13 that the grain shape of the lithium-nickel-manganese-containing composite oxide provided in this application is an octahedron with blunted edges.

It can also be learned from the test results of Examples 1 and 4 to 8 and Comparative Examples 1, 5, and 6 that when the core material does not contain the doping element provided in this application, the prepared lithium-nickel-manganese-containing composite oxide has high oxygen defect content, and the grain has sharp edges and corners, so the secondary battery cannot have both a high initial discharge capacity and good cycling performance and storage performance. A possible reason is that the doping element M provided in this application can enter lattices of grains and occupy transition metal sites and vacancies, and M-O bonds formed have higher bond energy than Mn-O bonds. This can stabilize the spinel structure, improve the crystal structure stability, reduce dissolution of manganese ions, and reduce the oxygen defect and rock-salt phase contents. The doping element M provided in this application also helps to blunt edges and corners of the octahedron.

It can also be learned from the test results of Examples 1, 21, and 22 and Comparative Examples 7 and 8 that when the pH for reaction between the aluminum salt and the phosphate is not between 5 and 9, the shell containing lithium aluminum phosphate or both lithium aluminum phosphate and aluminum phosphate cannot be formed, so the shell has poor lithium ion conductivity, which in turn leads to a low initial discharge capacity of the battery.

It can be learned from the test results of Examples 1 to 3 and Comparative Examples 9 and 10 that the content of the doping element being within a suitable range can improve the crystal structure stability, reduce dissolution of manganese ions, reduce the oxygen defect and rock-salt phase contents, and improve the lithium ion diffusion coefficient, so that the secondary battery can have both a high initial discharge capacity and good cycling performance and storage performance.

It can also be learned from the test results of Examples 1 to 33 that the oxygen defect content of the core material further satisfying $0 < (A_1 A_2)^{1/2} \leq 0.2$ and optionally $0 < (A_1/A_2)^{1/2} \leq 0.1$ helps to further improve the comprehensive performance of the secondary battery.

It can also be learned from the test results of Examples 1 to 33 that the lithium-nickel-manganese-containing composite oxide having suitable particle size, BET specific surface area, and particle size distribution helps to further improve the comprehensive performance of the secondary battery.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

**Table 1**

| No. | Core | S1 | S2 | | | | | S3 | | S5 | | | | | |
|---|---|---|---|---|---|---|---|---|---|---|---|---|---|---|---|
| | | Source of element M | Oxygen concentration (vol%) | $P_1$ (MPa) | Temperature rise velocity (°C/min) | $T_1$ (°C) | $t_1$ (h) | pH | Mass ratio of element P relative to core | Oxygen concentration (vol%) | $P_2$ (MPa) | Temperature rise velocity (°C/min) | $T_2$ (°C) | $t_2$ (h) | Molar ratio of Li/P |
| Example 1 | $Li(Ni_{0.5}Mn_{1.5})_{0.996}Nb_{0.004}O_4$ | $Nb_2O_5$ | 95 | 0.03 | 1 | 1000 | 10 | 7 | 0.30wt% | 95 | 0.03 | 1 | 700 | 10 | 0.15:1 |
| Example 2 | $Li(Ni_{0.5}Mn_{1.5})_{0.997}Nb_{0.003}O_4$ | $Nb_2O_5$ | 95 | 0.03 | 1 | 1000 | 10 | 7 | 0.30wt% | 95 | 0.03 | 1 | 700 | 10 | 0.15:1 |
| Example 3 | $Li(Ni_{0.5}Mn_{1.5})_{0.993}Nb_{0.007}O_4$ | $Nb_2O_5$ | 95 | 0.03 | 1 | 1000 | 10 | 7 | 0.30wt% | 95 | 0.03 | 1 | 700 | 10 | 0.15:1 |
| Example 4 | $Li(Ni_{0.5}Mn_{1.5})_{0.996}W_{0.004}O_4$ | $WO_3$ | 95 | 0.03 | 1 | 1000 | 10 | 7 | 0.30wt% | 95 | 0.03 | 1 | 700 | 10 | 0.15:1 |
| Example 5 | $Li(Ni_{0.5}Mn_{1.5})_{0.996}Ta_{0.004}O_4$ | $Ta_2O_5$ | 95 | 0.03 | 1 | 1000 | 10 | 7 | 0.30wt% | 95 | 0.03 | 1 | 700 | 10 | 0.15:1 |
| Example 6 | $Li(Ni_{0.5}Mn_{1.5})_{0.996}Mo_{0.004}O_4$ | $MoO_3$ | 95 | 0.03 | 1 | 1000 | 10 | 7 | 0.30wt% | 95 | 0.03 | 1 | 700 | 10 | 0.15:1 |
| Example 7 | $Li(Ni_{0.5}Mn_{1.5})_{0.996}P_{0.004}O_4$ | $P_2O_5$ | 95 | 0.03 | 1 | 1000 | 10 | 7 | 0.30wt% | 95 | 0.03 | 1 | 700 | 10 | 0.15:1 |
| Example 8 | $Li(Ni_{0.5}Mn_{1.5})_{0.996}B_{0.004}O_4$ | $B_2O_3$ | 95 | 0.03 | 1 | 1000 | 10 | 7 | 0.30wt% | 95 | 0.03 | 1 | 700 | 10 | 0.15:1 |
| Example 9 | $Li(Ni_{0.5}Mn_{1.5})_{0.996}Nb_{0.004}O_4$ | $Nb_2O_5$ | 80 | 0.03 | 1 | 1000 | 10 | 7 | 0.30wt% | 80 | 0.03 | 1 | 700 | 10 | 0.15:1 |
| Example 10 | $Li(Ni_{0.5}Mn_{1.5})_{0.996}Nb_{0.004}O_4$ | $Nb_2O_5$ | 50 | 0.03 | 1 | 1000 | 10 | 7 | 0.30wt% | 50 | 0.03 | 1 | 700 | 10 | 0.15:1 |
| Example 11 | $Li(Ni_{0.5}Mn_{1.5})_{0.996}Nb_{0.004}O_4$ | $Nb_2O_5$ | 95 | 0.02 | 1 | 1000 | 10 | 7 | 0.30wt% | 95 | 0.02 | 1 | 700 | 10 | 0.15:1 |
| Example 12 | $Li(Ni_{0.5}Mn_{1.5})_{0.996}Nb_{0.004}O_4$ | $Nb_2O_5$ | 95 | 0.04 | 1 | 1000 | 10 | 7 | 0.30wt% | 95 | 0.04 | 1 | 700 | 10 | 0.15:1 |
| Example 13 | $Li(Ni_{0.5}Mn_{1.5})_{0.996}Nb_{0.004}O_4$ | $Nb_2O_5$ | 95 | 0.01 | 1 | 1000 | 10 | 7 | 0.30wt% | 95 | 0.01 | 1 | 700 | 10 | 0.15:1 |
| Example 14 | $Li(Ni_{0.5}Mn_{1.5})_{0.996}Nb_{0.004}O_4$ | $Nb_2O_5$ | 95 | 0.1 | 1 | 1000 | 10 | 7 | 0.30wt% | 95 | 0.1 | 1 | 700 | 10 | 0.15:1 |
| Example 15 | $Li(Ni_{0.5}Mn_{1.5})_{0.996}Nb_{0.004}O_4$ | $Nb_2O_5$ | 95 | 0.03 | 3 | 1000 | 10 | 7 | 0.30wt% | 95 | 0.03 | 3 | 700 | 10 | 0.15:1 |

| No. | Core | S1 | S2 | | | | | S3 | | S5 | | | | | |
| | | Source of element M | Oxygen concentration (vol%) | $P_1$ (MPa) | Temperature rise velocity (°C/min) | $T_1$ (°C) | $t_1$ (h) | pH | Mass ratio of element P relative to core | Oxygen concentration (vol%) | $P_2$ (MPa) | Temperature rise velocity (°C/min) | $T_2$ (°C) | $t_2$ (h) | Molar ratio of Li/P |
|---|---|---|---|---|---|---|---|---|---|---|---|---|---|---|---|
| Example 16 | $Li(Ni_{0.5}Mn_{1.5})_{0.996}Nb_{0.004}O_4$ | $Nb_2O_5$ | 95 | 0.03 | 10 | 1000 | 10 | 7 | 0.30wt% | 95 | 0.03 | 10 | 700 | 10 | 0.15:1 |
| Example 17 | $Li(Ni_{0.5}Mn_{1.5})_{0.996}Nb_{0.004}O_4$ | $Nb_2O_5$ | 95 | 0.03 | 1 | 1000 | 5 | 7 | 0.30wt% | 95 | 0.03 | 1 | 700 | 10 | 0.15:1 |
| Example 18 | $Li(Ni_{0.5}Mn_{1.5})_{0.996}Nb_{0.004}O_4$ | $Nb_2O_5$ | 95 | 0.03 | 1 | 1000 | 30 | 7 | 0.30wt% | 95 | 0.03 | 1 | 700 | 10 | 0.15:1 |
| Example 19 | $Li(Ni_{0.5}Mn_{1.5})_{0.996}Nb_{0.004}O_4$ | $Nb_2O_5$ | 95 | 0.03 | 1 | 1000 | 3 | 7 | 0.30wt% | 95 | 0.03 | 1 | 700 | 10 | 0.15:1 |
| Example 20 | $Li(Ni_{0.5}Mn_{1.5})_{0.996}Nb_{0.004}O_4$ | $Nb_2O_5$ | 95 | 0.03 | 1 | 1000 | 50 | 7 | 0.30wt% | 95 | 0.03 | 1 | 700 | 10 | 0.15:1 |
| Example 21 | $Li(Ni_{0.5}Mn_{1.5})_{0.996}Nb_{0.004}O_4$ | $Nb_2O_5$ | 95 | 0.03 | 1 | 1000 | 10 | 6 | 0.30wt% | 95 | 0.03 | 1 | 700 | 10 | 0.15:1 |
| Example 22 | $Li(Ni_{0.5}Mn_{1.5})_{0.996}Nb_{0.004}O_4$ | $Nb_2O_5$ | 95 | 0.03 | 1 | 1000 | 10 | 8 | 0.30wt% | 95 | 0.03 | 1 | 700 | 10 | 0.15:1 |
| Example 23 | $Li(Ni_{0.5}Mn_{1.5})_{0.996}Nb_{0.004}O_4$ | $Nb_2O_5$ | 95 | 0.03 | 1 | 1000 | 10 | 7 | 0.30wt% | 95 | 0.03 | 1 | 500 | 10 | 0.15:1 |
| Example 24 | $Li(Ni_{0.5}Mn_{1.5})_{0.996}Nb_{0.004}O_4$ | $Nb_2O_5$ | 95 | 0.03 | 1 | 1000 | 10 | 7 | 0.30wt% | 95 | 0.03 | 1 | 600 | 10 | 0.15:1 |
| Example 25 | $Li(Ni_{0.5}Mn_{1.5})_{0.996}Nb_{0.004}O_4$ | $Nb_2O_5$ | 95 | 0.03 | 1 | 1000 | 10 | 7 | 0.30wt% | 95 | 0.03 | 1 | 300 | 10 | 0.15:1 |
| Example 26 | $Li(Ni_{0.5}Mn_{1.5})_{0.996}Nb_{0.004}O_4$ | $Nb_2O_5$ | 95 | 0.03 | 1 | 1000 | 10 | 7 | 0.30wt% | 95 | 0.03 | 1 | 800 | 10 | 0.15:1 |
| Example 27 | $Li(Ni_{0.5}Mn_{1.5})_{0.996}Nb_{0.004}O_4$ | $Nb_2O_5$ | 95 | 0.03 | 1 | 1000 | 10 | 7 | 0.10wt% | 95 | 0.03 | 1 | 700 | 10 | 0.15:1 |
| Example 28 | $Li(Ni_{0.5}Mn_{1.5})_{0.996}Nb_{0.004}O_4$ | $Nb_2O_5$ | 95 | 0.03 | 1 | 1000 | 10 | 7 | 0.50wt% | 95 | 0.03 | 1 | 700 | 10 | 0.15:1 |
| Example 29 | $Li(Ni_{0.5}Mn_{1.5})_{0.996}Nb_{0.004}O_4$ | $Nb_2O_5$ | 95 | 0.03 | 1 | 1000 | 10 | 7 | 0.03wt% | 95 | 0.03 | 1 | 700 | 10 | 0.15:1 |
| Example 30 | $Li(Ni_{0.5}Mn_{1.5})_{0.996}Nb_{0.004}O_4$ | $Nb_2O_5$ | 95 | 0.03 | 1 | 1000 | 10 | 7 | 1.20wt% | 95 | 0.03 | 1 | 700 | 10 | 0.15:1 |
| Example 31 | $Li(Ni_{0.5}Mn_{1.5})_{0.996}Nb_{0.004}O_4$ | $Nb_2O_5$ | 95 | 0.03 | 1 | 1000 | 10 | 7 | 0.30wt% | 95 | 0.03 | 1 | 700 | 10 | 0.375:1 |
| Example 32 | $Li(Ni_{0.5}Mn_{1.5})_{0.996}Nb_{0.004}O_4$ | $Nb_2O_5$ | 95 | 0.03 | 1 | 1000 | 10 | 7 | 0.30wt% | 95 | 0.03 | 1 | 700 | 10 | 0.525:1 |

22

| No. | Core | S1 Source of element M | S2 Oxygen concentration (vol%) | $P_1$ (MPa) | Temperature rise velocity (°C/min) | $T_1$ (°C) | $t_1$ (h) | S3 pH | Mass ratio of element P relative to core | S5 Oxygen concentration (vol%) | $P_2$ (MPa) | Temperature rise velocity (°C/min) | $T_2$ (°C) | $t_2$ (h) | Molar ratio of Li/P |
|---|---|---|---|---|---|---|---|---|---|---|---|---|---|---|---|
| Example 33 | $Li(Ni_{0.5}Mn_{1.5})_{0.996}Nb_{0.004}O_4$ | $Nb_2O_5$ | 95 | 0.03 | 1 | 1000 | 10 | 7 | 0.30wt% | 95 | 0.03 | 1 | 700 | 10 | 0.90:1 |
| Comparative Example 1 | $LiNi_{0.5}Mn_{1.5}O_4$ | / | 95 | 0.03 | 1 | 1000 | 10 | / | / | / | / | / | / | / | / |
| Comparative Example 2 | $Li(Ni_{0.5}Mn_{1.5})_{0.996}Nb_{0.004}O_4$ | $Nb_2O_5$ | 95 | 0.03 | 1 | 1000 | 10 | / | / | / | / | / | / | / | / |
| Comparative Example 3 | $LiNi_{0.5}Mn_{1.5}O_4$ | / | 95 | 0.03 | 1 | 1000 | 10 | 7 | 0.30wt% | 95 | 0.03 | 1 | 700 | 10 | 0.15:1 |
| Comparative Example 4 | $Li(Ni_{0.5}Mn_{1.5})_{0.996}Nb_{0.004}O_4$ | $Nb_2O_5$ | 95 | 0.03 | 1 | 1000 | 10 | 7 | 0.30wt% | 95 | 0.03 | 1 | 700 | 10 | / |
| Comparative Example 5 | $Li(Ni_{0.5}Mn_{1.5})_{0.996}Sr_{0.004}O_4$ | SrO | 95 | 0.03 | 1 | 1000 | 10 | 7 | 0.30wt% | 95 | 0.03 | 1 | 700 | 10 | 0.15:1 |
| Comparative Example 6 | $Li(Ni_{0.5}Mn_{1.5})_{0.996}Y_{0.004}O_4$ | $Y_2O_3$ | 95 | 0.03 | 1 | 1200 | 10 | 7 | 0.30wt% | 95 | 0.03 | 1 | 700 | 10 | 0.15:1 |
| Comparative Example 7 | $Li(Ni_{0.5}Mn_{1.5})_{0.996}Nb_{0.004}O_4$ | $Nb_2O_5$ | 95 | 0.03 | 1 | 1000 | 10 | 3 | 0.30wt% | 95 | 0.03 | 1 | 700 | 10 | 0.15:1 |
| Comparative Example 8 | $Li(Ni_{0.5}Mn_{1.5})_{0.996}Nb_{0.004}O_4$ | $Nb_2O_5$ | 95 | 0.03 | 1 | 1000 | 10 | 10 | 0.30wt% | 95 | 0.03 | 1 | 700 | 10 | 0.15:1 |
| Comparative Example 9 | $Li(Ni_{0.5}Mn_{1.5})_{0.9995}Nb_{0.0005}O_4$ | $Nb_2O_5$ | 95 | 0.03 | 1 | 1000 | 10 | 7 | 0.30wt% | 95 | 0.03 | 1 | 700 | 10 | 0.15:1 |
| Comparative Example 10 | $Li(Ni_{0.5}Mn_{1.5})_{0.98}Nb_{0.02}O_4$ | $Nb_2O_5$ | 95 | 0.03 | 1 | 1000 | 10 | 7 | 0.30wt% | 95 | 0.03 | 1 | 700 | 10 | 0.15:1 |

23

**Table 2**

| No. | Mass ratio of element P in aluminum phosphate to element P in lithium aluminum phosphate in shell | Thickness of shell (nm) | Morphology | Dv50 (μm) | (Dv90 - $D_v$10) /$D_v$50 | BET ($m^2$/g) | $(A_1/A_2)^{1/2}$ | Discharge capacity of half cell (mAh/g) | Discharge capacity of full cell (mAh/g) | Capacity retention rate after 300 cycles at 25°C (%) | Capacity retention rate after 200 cycles at 45°C (%) | Storage days at full charge at 45°C |
|---|---|---|---|---|---|---|---|---|---|---|---|---|
| Example 1 | 90%:10% | 17 | Octahedron with blunted edges, single crystal | 8.9 | 0.65 | 0.55 | 0.0598 | 135.8 | 129.7 | 93.9 | 86.8 | 345 |
| Example 2 | 90%:10% | 17 | Octahedron with blunted edges, single crystal | 8.0 | 0.73 | 0.61 | 0.0684 | 136.2 | 129.9 | 92.4 | 86.0 | 337 |
| Example 3 | 90%:10% | 15 | Octahedron with blunted edges, single crystal | 11.3 | 0.73 | 0.59 | 0.1354 | 134.2 | 129.6 | 90.0 | 85.4 | 308 |
| Example 4 | 90%:10% | 18 | Octahedron with blunted edges, single crystal | 7.9 | 0.72 | 0.69 | 0.0890 | 134.4 | 128.0 | 95.1 | 88.4 | 309 |
| Example 5 | 90%:10% | 17 | Octahedron with blunted edges, single crystal | 7.8 | 0.68 | 0.72 | 0.1265 | 135.4 | 128.7 | 92.5 | 88.4 | 351 |
| Example 6 | 90%:10% | 18 | Octahedron with blunted edges, single crystal | 9.2 | 0.77 | 0.69 | 0.1579 | 135.9 | 127.4 | 93.6 | 85.9 | 355 |

24

(continued)

| No. | Mass ratio of element P in aluminum phosphate to element P in lithium aluminum phosphate in shell | Thickness of shell (nm) | Morphology | Dv50 ($\mu$m) | (Dv90 - $D_v$10) /$D_v$50 | BET ($m^2$/g) | $(A_1/A_2)^{1/2}$ | Discharge capacity of half cell (mAh/g) | Discharge capacity of full cell (mAh/g) | Capacity retention rate after 300 cycles at 25°C (%) | Capacity retention rate after 200 cycles at 45°C (%) | Storage days at full charge at 45°C |
|---|---|---|---|---|---|---|---|---|---|---|---|---|
| Example 7 | 90%:10% | 17 | Octahedron with blunted edges, single crystal | 7.6 | 0.89 | 0.67 | 0.1438 | 134.6 | 126.8 | 92.2 | 87.3 | 367 |
| Example 8 | 90%:10% | 19 | Octahedron with blunted edges, single crystal | 8.4 | 0.74 | 0.75 | 0.1298 | 135.1 | 127.2 | 93.4 | 88.4 | 342 |
| Example 9 | 90%:10% | 17 | Octahedron with blunted edges, single crystal | 9.1 | 0.69 | 0.52 | 0.0721 | 135.1 | 128.9 | 88.9 | 83.4 | 322 |
| Example 10 | 90%:10% | 15 | Octahedron with blunted edges, single crystal | 8.2 | 0.83 | 0.50 | 0.2450 | 134.6 | 127.8 | 84.1 | 79.2 | 327 |
| Example 11 | 90%:10% | 19 | Octahedron with blunted edges, single crystal | 7.5 | 0.91 | 0.55 | 0.0713 | 135.0 | 128.7 | 90.3 | 84.9 | 337 |
| Example 12 | 90%:10% | 18 | Octahedron with blunted edges, single crystal | 8.1 | 0.82 | 0.94 | 0.0569 | 134.4 | 128.3 | 91.5 | 85.6 | 334 |

(continued)

| No. | Mass ratio of element P in aluminum phosphate to element P in lithium aluminum phosphate in shell | Thickness of shell (nm) | Morphology | Dv50 (μm) | $(D_v90 - D_v10)/D_v50$ | BET (m²/g) | $(A_1/A_2)^{1/2}$ | Discharge capacity of half cell (mAh/g) | Discharge capacity of full cell (mAh/g) | Capacity retention rate after 300 cycles at 25°C (%) | Capacity retention rate after 200 cycles at 45°C (%) | Storage days at full charge at 45°C |
|---|---|---|---|---|---|---|---|---|---|---|---|---|
| Example 13 | 90%:10% | 18 | Octahedron with blunted edges, single crystal | 7.7 | 1.44 | 0.52 | 0.0689 | 136.4 | 130.1 | 88.7 | 82.9 | 299 |
| Example 14 | 90%:10% | 19 | Octahedron with blunted edges, single crystal | 6.9 | 1.56 | 1.62 | 0.6620 | 136.5 | 130.3 | 83.4 | 77.6 | 254 |
| Example 15 | 90%:10% | 16 | Octahedron with blunted edges, single crystal | 8.2 | 0.88 | 0.66 | 0.0832 | 135.4 | 128.6 | 90.2 | 83.9 | 344 |
| Example 16 | 90%:10% | 15 | Octahedron with blunted edges, single crystal | 8.5 | 1.38 | 0.48 | 0.2210 | 134.9 | 127.7 | 85.2 | 78.4 | 308 |
| Example 17 | 90%:10% | 16 | Octahedron with blunted edges, single crystal | 8.1 | 0.85 | 0.64 | 0.1510 | 137.7 | 131.0 | 89.1 | 83.5 | 334 |
| Example 18 | 90%:10% | 18 | Octahedron with blunted edges, single crystal | 8.7 | 0.66 | 0.69 | 0.1692 | 137.5 | 128.9 | 93.0 | 87.4 | 319 |

| No. | Mass ratio of element P in aluminum phosphate to element P in lithium aluminum phosphate in shell | Thickness of shell (nm) | Morphology | Dv50 (μm) | (Dv90 - $D_v$10) /$D_v$50 | BET (m²/g) | $(A_1/A_2)^{1/2}$ | Discharge capacity of half cell (mAh/g) | Discharge capacity of full cell (mAh/g) | Capacity retention rate after 300 cycles at 25°C (%) | Capacity retention rate after 200 cycles at 45°C (%) | Storage days at full charge at 45°C |
|---|---|---|---|---|---|---|---|---|---|---|---|---|
| Example 19 | 90%:10% | 18 | Octahedron with blunted edges, single crystal | 9.2 | 0.60 | 0.57 | 0.3510 | 135.1 | 130.7 | 87.8 | 81.9 | 284 |
| Example 20 | 90%:10% | 19 | Octahedron with blunted edges, single crystal | 9.3 | 0.69 | 0.65 | 0.3623 | 129.7 | 125.7 | 86.5 | 80.4 | 266 |
| Example 21 | 90%:10% | 16 | Octahedron with blunted edges, single crystal | 8.2 | 0.87 | 0.75 | 0.1689 | 133.8 | 127.8 | 93.5 | 87.4 | 356 |
| Example 22 | 90%:10% | 18 | Octahedron with blunted edges, single crystal | 7.9 | 0.74 | 0.62 | 0.1653 | 133.2 | 127.2 | 93.7 | 86.9 | 361 |
| Example 23 | 90%:10% | 18 | Octahedron with blunted edges, single crystal | 8.3 | 0.72 | 0.66 | 0.1480 | 138.5 | 131.3 | 91.7 | 86.1 | 329 |
| Example 24 | 90%:10% | 17 | Octahedron with blunted edges, single crystal | 8.2 | 0.69 | 0.58 | 0.0751 | 137.6 | 131.0 | 93.1 | 86.7 | 331 |

EP 4 369 439 A1

(continued)

| No. | Mass ratio of element P in aluminum phosphate to element P in lithium aluminum phosphate in shell | Thickness of shell (nm) | Morphology | Dv50 (μm) | $(Dv90 - D_v10)/D_v50$ | BET (m²/g) | $(A_1/A_2)^{1/2}$ | Discharge capacity of half cell (mAh/g) | Discharge capacity of full cell (mAh/g) | Capacity retention rate after 300 cycles at 25°C (%) | Capacity retention rate after 200 cycles at 45°C (%) | Storage days at full charge at 45°C |
|---|---|---|---|---|---|---|---|---|---|---|---|---|
| Example 25 | 90%:10% | 15 | Octahedron with blunted edges, single crystal | 8.5 | 0.73 | 0.64 | 0.3140 | 137.2 | 132.0 | 86.6 | 80.4 | 300 |
| Example 26 | 90%:10% | 17 | Octahedron with blunted edges, single crystal | 8.8 | 0.77 | 0.75 | 0.2410 | 135.5 | 129.2 | 85.1 | 79.7 | 306 |
| Example 27 | 90%:10% | 10 | Octahedron with blunted edges, single crystal | 7.8 | 0.78 | 0.52 | 0.1899 | 133.2 | 127.5 | 92.2 | 86.4 | 375 |
| Example 28 | 90%:10% | 22 | Octahedron with blunted edges, single crystal | 8.3 | 0.64 | 0.95 | 0.1712 | 132.5 | 126.8 | 94.1 | 87.2 | 391 |
| Example 29 | 90%:10% | 4 | Octahedron with blunted edges, single crystal | 8.1 | 0.66 | 0.44 | 0.1638 | 132.8 | 127.4 | 91.4 | 86.3 | 324 |
| Example 30 | 90%:10% | 39 | Octahedron with blunted edges, single crystal | 8.7 | 0.63 | 1.15 | 0.1859 | 128.2 | 122.7 | 93.6 | 87.0 | 377 |

(continued)

| No. | Mass ratio of element P in aluminum phosphate to element P in lithium aluminum phosphate in shell | Thickness of shell (nm) | Morphology | Dv50 (μm) | (Dv90-Dv10)/Dv50 | BET (m²/g) | $(A_1/A_2)^{1/2}$ | Discharge capacity of half cell (mAh/g) | Discharge capacity of full cell (mAh/g) | Capacity retention rate after 300 cycles at 25°C (%) | Capacity retention rate after 200 cycles at 45°C (%) | Storage days at full charge at 45°C |
|---|---|---|---|---|---|---|---|---|---|---|---|---|
| Example 31 | 75%:25% | 18 | Octahedron with blunted edges, single crystal | 8.2 | 0.87 | 0.58 | 0.1775 | 134.9 | 128.6 | 93.8 | 86.8 | 365 |
| Example 32 | 65%:35% | 18 | Octahedron with blunted edges, single crystal | 8.3 | 0.95 | 0.67 | 0.1729 | 135.9 | 129.8 | 92.4 | 85.9 | 341 |
| Example 33 | 40%:60% | 25 | Octahedron with blunted edges, single crystal | 9.0 | 0.71 | 1.12 | 0.1522 | 127.1 | 121.1 | 88.7 | 82.5 | 310 |
| Comparative Example 1 | / | / | Octahedron, single crystal | 5.7 | 0.94 | 0.89 | 0.2541 | 137.6 | 131.8 | 83.5 | 73.4 | 209 |
| Comparative Example 2 | / | / | Octahedron with blunted edges, single crystal | 8.5 | 0.69 | 0.45 | 0.0569 | 135.6 | 130.6 | 91.4 | 85.8 | 221 |
| Comparative Example 3 | 90%:10% | 17 | Octahedron, single crystal | 5.9 | 0.88 | 0.93 | 0.2438 | 135.9 | 128.4 | 87.4 | 77.1 | 279 |
| Comparative Example 4 | 100%:0% | 18 | Octahedron with blunted edges, single crystal | 7.7 | 0.67 | 0.58 | 0.1382 | 132.5 | 125.5 | 93.4 | 87.2 | 314 |

(continued)

| No. | Mass ratio of element P in aluminum phosphate to element P in lithium aluminum phosphate in shell | Thickness of shell (nm) | Morphology | Dv50 (µm) | (Dv90 - $D_v10)/D_v50$ | BET (m²/g) | $(A_1/A_2)^{1/2}$ | Discharge capacity of half cell (mAh/g) | Discharge capacity of full cell (mAh/g) | Capacity retention rate after 300 cycles at 25°C (%) | Capacity retention rate after 200 cycles at 45°C (%) | Storage days at full charge at 45°C |
|---|---|---|---|---|---|---|---|---|---|---|---|---|
| Comparative Example 5 | 90%:10% | 17 | Octahedron, single crystal | 7.2 | 1.44 | 0.29 | 0.2540 | 134.3 | 127.6 | 80.1 | 72.4 | 240 |
| Comparative Example 6 | 90%:10% | 17 | Octahedron, single crystal | 7.7 | 1.59 | 0.25 | 0.2870 | 130.1 | 124.1 | 78.4 | 71.4 | 221 |
| Comparative Example 7 | 0%:0% | 17 | Octahedron with blunted edges, single crystal | 8.8 | 0.88 | 0.67 | 0.1748 | 125.7 | 119.5 | 90.5 | 85.4 | 277 |
| Comparative Example 8 | 0%:0% | 17 | Octahedron with blunted edges, single crystal | 7.5 | 0.79 | 0.73 | 0.1854 | 128.5 | 122.7 | 90.4 | 85.6 | 284 |
| Comparative Example 9 | 90%:10% | 18 | Octahedron with blunted edges, single crystal | 4.8 | 0.77 | 0.92 | 0.3140 | 137.5 | 131.3 | 84.2 | 79.2 | 257 |
| Comparative Example 10 | 90%:10% | 14 | Octahedron with blunted edges, single crystal | 16.2 | 0.71 | 0.50 | 0.4721 | 132.1 | 126.0 | 88.5 | 83.4 | 259 |

**Claims**

1. A lithium-nickel-manganese-containing composite oxide, having a core-shell structure and comprising a core and a shell enveloping surface of the core, wherein the core comprises $Li_x(Ni_yMn_{2-y})_{1-m}M_mO_4$, wherein M comprises one or more selected from Mg, elements from group IVB to group VIB, elements from group IIIA to group VA, and lanthanide elements, and optionally comprises one or more elements selected from Zr, W, Sb, P, Ti, B, Ta, Nb, Ce, Al, Mo, and Mg, wherein $0.95 \leq x \leq 1.10$, $0.40 \leq y \leq 0.60$, and $0.001 \leq m \leq 0.015$; and the shell comprises lithium aluminum phosphate, and optionally comprises lithium aluminum phosphate and aluminum phosphate.

2. The lithium-nickel-manganese-containing composite oxide according to claim 1, wherein
   M comprises one or more elements selected from W, P, B, Ta, Nb, and Mo, and optionally comprises more than two elements selected from W, P, B, Ta, Nb, and Mo; and/or

$$0.003 \leq m \leq 0.007;$$

   and/or

$$0.45 \leq y \leq 0.55,$$

   and optionally y is 0.50.

3. The lithium-nickel-manganese-containing composite oxide according to claim 1 or 2, wherein the core satisfies $0 < (A_1/A_2)^{1/2} \leq 0.2$, and optionally $0 < (A_1/A_2)^{1/2} \leq 0.1$, wherein $A_1$ represents peak area of a diffraction peak of the core at $2\theta$ of $43.7 \pm 0.2°$ in an X-ray diffraction pattern determined by using a powder X-ray diffractometer with Cu K$\alpha$1 ray, and $A_2$ represents peak area of a diffraction peak of the core at $2\theta$ of $18.8 \pm 0.1°$ in the X-ray diffraction pattern determined by using the powder X-ray diffractometer with Cu K$\alpha$1 ray.

4. The lithium-nickel-manganese-containing composite oxide according to any one of claims 1 to 3, wherein the shell has a uniform and continuous thickness.

5. The lithium-nickel-manganese-containing composite oxide according to any one of claims 1 to 4, wherein the lithium aluminum phosphate is embedded in the shell and discretely distributed.

6. The lithium-nickel-manganese-containing composite oxide according to any one of claims 1 to 5, wherein based on a total weight of element P in the shell, a percentage of element P in the lithium aluminum phosphate in the shell is greater than 0 and less than or equal to 50wt%, and optionally 10wt%-25wt%.

7. The lithium-nickel-manganese-containing composite oxide according to any one of claims 1 to 6, wherein thickness of the shell is below 30 nm, optionally 5 nm-30 nm, and more optionally 5 nm-20 nm.

8. The lithium-nickel-manganese-containing composite oxide according to any one of claims 1 to 7, wherein

   a particle size by volume $D_v50$ of the lithium-nickel-manganese-containing composite oxide is 5 $\mu$m-15 $\mu$m, and optionally 5 $\mu$m-10 $\mu$m; and/or
   a span $(D_v90 - D_v10)/D_v50$ of the lithium-nickel-manganese-containing composite oxide is $\leq 1.0$, and optionally $(D_v90 - D_v10)/D_v50$ is $\leq 0.8$; and/or
   a BET specific surface area of the lithium-nickel-manganese-containing composite oxide is 0.3 m$^2$/g-1.0 m$^2$/g, and optionally 0.3 m$^2$/g-0.7 m$^2$/g.

9. The lithium-nickel-manganese-containing composite oxide according to any one of claims 1 to 8, wherein

   particle morphology of the lithium-nickel-manganese-containing composite oxide is single crystal or quasi-single crystal, and optionally single crystal; and
   grain shape of the lithium-nickel-manganese-containing composite oxide is an octahedron with blunted edges.

10. A method for preparing lithium-nickel-manganese-containing composite oxide, comprising the following steps: S1.

mixing a source of element Ni, a source of element Mn, a source of element M, and a source of element Li at a predetermined ratio to obtain a mixture; S2. heating the mixture obtained in S1 to a first temperature $T_1$ in an oxygen-containing atmosphere at a first pressure $P_1$ and maintaining the temperature for a first time $t_1$, to obtain a core after completion; S3. adding the core obtained in S2 to a solution containing aluminum salt and phosphate, and adjusting pH to make the aluminum salt react with the phosphate, to obtain a mixed solution after completion; S4. performing solid-liquid separation on the mixed solution obtained in S3, followed by drying and sieving, to obtain an intermediate product; and S5. mixing the intermediate product obtained in S4 and the source of element Li at a predetermined ratio, heating the mixture to a second temperature $T_2$ in the oxygen-containing atmosphere at a second pressure $P_2$, and maintaining the temperature for a second time $t_2$, to obtain a lithium-nickel-manganese-containing composite oxide after completion, wherein the lithium-nickel-manganese-containing composite oxide has a core-shell structure and comprises a core and a shell enveloping surface of the core, wherein the core comprises $Li_x(Ni_yMn_{2-y})_{1-m}M_mO_4$, wherein M comprises one or more selected from Mg, elements from group IVB to group VIB, elements from group IIIA to group VA, and lanthanide elements, and optionally comprises one or more elements selected from Zr, W, Sb, P, Ti, B, Ta, Nb, Ce, Al, Mo, and Mg, wherein $0.95 \leq x \leq 1.10$, $0.40 \leq y \leq 0.60$, and $0.001 \leq m \leq 0.015$; and the shell comprises lithium aluminum phosphate, and optionally comprises lithium aluminum phosphate and aluminum phosphate.

11. The method according to claim 10, wherein in S1,

> the source of element Ni and the source of element Mn are nickel manganese hydroxides; and/or
> the source of element M comprises one or more selected from nitrate, hydrochloride, sulfate, carbonate, and acetate of element M; and/or
> the source of element Li comprises one or more selected from lithium hydroxide, lithium carbonate, and lithium oxide.

12. The method according to claim 10 or 11, wherein in S1,

> a ratio of a substance amount of element Li to a total substance amount of elements Ni and Mn in the mixture is (0.45-0.55):1; and/or
> a ratio of a substance amount of element Li to a substance amount of element M in the mixture is 1:(0.001-0.015), and optionally 1:(0.003-0.007).

13. The method according to any one of claims 10 to 12, wherein in S2,

> a temperature rise velocity is $\leq 5°C/min$, and optionally $\leq 3°C/min$; and/or
> an oxygen concentration of the oxygen-containing atmosphere is $> 60vol\%$, and optionally 80vol%-100vol%; and/or
> the first pressure $P_1$ is 0.02 MPa-0.08 MPa relative to atmospheric pressure, and optionally 0.02 MPa-0.04 MPa; and/or
> the first temperature $T_1$ is 500°C-1200°C, and optionally 700°C-1200°C; and/or the first time $t_1$ is 5 h-40 h, and optionally 5 h-30 h.

14. The method according to any one of claims 10 to 13, wherein in S3, the core obtained in S2 is added to the aluminum salt solution, then the phosphate solution is added, and the pH is adjusted to make the aluminum salt react with the phosphate, to obtain the mixed solution after completion.

15. The method according to any one of claims 10 to 14, wherein in S3,

> the aluminum salt comprises one or more selected from aluminum nitrate, aluminum chloride, aluminum sulfate, and aluminum carbonate; and/or
> the phosphate comprises one or more selected from ammonium hydrogen phosphate, ammonium dihydrogen phosphate, and ammonium phosphate; and/or
> the pH for reaction between the aluminum salt and the phosphate is controlled to be 5-9, and optionally 6-8; and/or
> a ratio of a substance amount of element Al in the aluminum salt to a substance amount of element P in the phosphate is 1: 1; and/or
> based on a mass of the core, the phosphate is added in an amount such that a mass of element P is 0.05wt%-1wt%, and optionally 0.1wt%-0.5wt%.

16. The method according to any one of claims 10 to 15, wherein in S5,

a temperature rise velocity is $\leq 5°C/min$, and optionally $\leq 3°C/min$; and/or
an oxygen concentration of the oxygen-containing atmosphere is > 60vol%, and optionally 80vol%-100vol%; and/or
the second pressure $P_2$ is 0.02 MPa-0.08 MPa relative to atmospheric pressure, and optionally 0.02 MPa-0.04 MPa; and/or
the second temperature $T_2$ is 400°C-700°C, and optionally 500°C-700°C; and/or
the second time $t_2$ is 5 h-40 h, and optionally 5 h-30 h.

17. The method according to any one of claims 10 to 16, wherein

a ratio of a substance amount of element Li in the source of element Li in S5 to a substance amount of element P in the phosphate in S3 is $\leq 0.75$, and optionally $\leq 0.375$; and/or
the source of element Li in S5 comprises one or more selected from lithium hydroxide, lithium carbonate, and lithium oxide.

18. A positive electrode plate, comprising a positive electrode current collector and a positive electrode film layer disposed on at least one surface of the positive electrode current collector, wherein the positive electrode film layer comprises the lithium-nickel-manganese-containing composite oxide according to any one of claims 1 to 9 or a lithium-nickel-manganese-containing composite oxide prepared by using the method according to any one of claims 10 to 17, and based on a total weight of the positive electrode film layer, a percentage of the lithium-nickel-manganese-containing composite oxide in the positive electrode film layer is 1wt%-99wt%, and optionally 8 5 wt%-99wt%.

19. A secondary battery, comprising the positive electrode plate according to claim 18.

20. An electric apparatus, comprising the secondary battery according to claim 19.

<u>10</u>

102b ⌉
         ⌡ 102
102a ⌋

101

FIG. 1

<u>5</u>

FIG. 2

5

FIG. 3

FIG. 4

FIG. 5

FIG. 6

FIG. 7

FIG. 8

FIG. 9

FIG. 10

FIG. 11

FIG. 12

FIG. 13

## INTERNATIONAL SEARCH REPORT

| International application No. |
|---|
| **PCT/CN2022/119710** |

**A.    CLASSIFICATION OF SUBJECT MATTER**

    H01M4/36(2006.01)i;  H01M4/525(2010.01)i

According to International Patent Classification (IPC) or to both national classification and IPC

**B.    FIELDS SEARCHED**

Minimum documentation searched (classification system followed by classification symbols)

    IPC:H01M

Documentation searched other than minimum documentation to the extent that such documents are included in the fields searched

Electronic data base consulted during the international search (name of data base and, where practicable, search terms used)

    CNABS; CNTXT; VEN; ENTXT; CNKI: 尖晶石, 镍锰酸锂, 掺杂, 核, 壳, 包覆, 锂金属磷酸盐, 磷酸铝, 磷酸铝锂, spinel, lithium nickel manganate, dope, core, shell, coat, lithium metal phosphate, aluminum phosphate, lithium aluminum phosphate

**C.    DOCUMENTS CONSIDERED TO BE RELEVANT**

| Category* | Citation of document, with indication, where appropriate, of the relevant passages | Relevant to claim No. |
|---|---|---|
| Y | US 2012141873 A1 (SAMSUNG SDI CO., LTD.) 07 June 2012 (2012-06-07) <br> description, paragraphs 29-82, and figure 1 | 1-20 |
| Y | CN 113707875 A (SVOLT ENERGY TECHNOLOGY CO., LTD.) 26 November 2021 (2021-11-26) <br> description, paragraphs 2-47, and figure 1 | 1-20 |
| Y | CN 104347855 A (XI'AN ZHONGKE NEW ENERGY TECHNOLOGY CO., LTD.) 11 February 2015 (2015-02-11) <br> description, paragraphs 2-37 | 1-20 |
| A | CN 106058225 A (CHINA AVIATION LITHIUM BATTERY (LUOYANG) CO., LTD.) 26 October 2016 (2016-10-26) <br> entire document | 1-20 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **31 May 2023** | **05 June 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2022/119710**

| Patent document cited in search report | | | Publication date (day/month/year) | Patent family member(s) | | | Publication date (day/month/year) |
|---|---|---|---|---|---|---|---|
| US | 2012141873 | A1 | 07 June 2012 | US | 9343739 | B2 | 17 May 2016 |
| | | | | KR | 20120061374 | A | 13 June 2012 |
| | | | | KR | 101320390 | B1 | 23 October 2013 |
| CN | 113707875 | A | 26 November 2021 | CN | 113707875 | B | 07 March 2023 |
| CN | 104347855 | A | 11 February 2015 | | None | | |
| CN | 106058225 | A | 26 October 2016 | WO | 2018032569 | A1 | 22 February 2018 |

Form PCT/ISA/210 (patent family annex) (July 2022)

**EP 4 369 439 A1**

**Patent documents cited in the description**

- GB 190772016 T
- GB 195872017 T